(19) Europäisches Patentamt
European Patent Office
Office européen des brevets

(11) **EP 4 518 174 A1**

(12) **EUROPEAN PATENT APPLICATION**
published in accordance with Art. 153(4) EPC

(43) Date of publication:
**05.03.2025 Bulletin 2025/10**

(21) Application number: **23795622.2**

(22) Date of filing: **28.04.2023**

(51) International Patent Classification (IPC):
***H04B 7/0456*** (2017.01)

(52) Cooperative Patent Classification (CPC):
**H04B 7/0456; H04B 7/06; H04L 5/00; H04W 72/23**

(86) International application number:
**PCT/CN2023/091567**

(87) International publication number:
**WO 2023/208190 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210475018**

(71) Applicant: **Datang Mobile Communications
Equipment Co., Ltd.
Beijing 100085 (CN)**

(72) Inventors:
• **SONG, Lei**
  **Beijing 100085 (CN)**
• **HUANG, Qiuping**
  **Beijing 100085 (CN)**
• **GAO, Qiubin**
  **Beijing 100085 (CN)**
• **LUO, Yajuan**
  **Beijing 100085 (CN)**
• **LI, Hui**
  **Beijing 100085 (CN)**

(74) Representative: **Studio Torta S.p.A.
Via Viotti, 9
10121 Torino (IT)**

(54) **INFORMATION DETERMINATION METHOD AND APPARATUS**

(57) Embodiments of the present disclosure provide an information determination method and apparatus. The method comprises: obtaining downlink control information sent by a network side; and determining first information and/or second information on the basis of an SRI field and/or a TPMI field in the downlink control information; wherein the first information comprises one or more among the following: a data stream, a transmission occasion or RB set, or a PUSCH; and the second information comprises one or more among the following: a PUSCH port, an SRS port, or a DMRS port. One or more among a data stream, a transmission occasion or RB set, or a PUSCH and one or more among a PUSCH port, an SRS port, or a DMRS port are determined on the basis of an SRI field and/or a TPMI field in downlink control information sent by a network side, which are used for uplink transmission pre-coding; uplink transmission is guaranteed.

**EP 4 518 174 A1**

Obtaining DCI transmitted from a network side — 100

Determining first information and/or second information based on a SRI field and/or a TPMI field in the DCI, where the first information includes one or more of the following: a data stream, a transmission occasion or an RB set, or a PUSCH; and the second information includes one or more of the following: a PUSCH port, an SRS port, or a DMRS port — 110

FIG. 1

**Description**

CROSS-REFERENCES TO RELATED APPLICATIONS

The present application claims priority to Chinese patent application No. 202210475018.1 filed on April 29, 2022, entitled "Information Determination Method and Apparatus", which is hereby incorporated by reference in its entirety.

FIELD

The present application relates to the field of communications, and in particular, to methods and apparatuses for determining information.

BACKGROUND

As an increase in a terminal's requirements for data rate and reliability performance, multi-transmission reception point (TRP) multi-antenna panel transmission may be implemented in the future. In case that a network side uses a single piece of downlink control information (DCI) to schedule a terminal for uplink transmission, it is uncertain to use what kind of precoding information, resulting in the inability of uplink transmission.

BRIEF SUMMARY

Embodiments of the present application provide methods and apparatuses for determining information, to solve a defect in the related art that uplink transmission cannot be performed, and ensure that uplink transmission is performed.
An embodiment of the present application provides a method for determining information, performed by a terminal, including:

obtaining downlink control information (DCI) transmitted from a network side; and

determining first information and/or second information based on a sounding reference signal resource indicator (SRI) field and/or a precoding information and number of layers (TPMI) field in the DCI,

where the first information includes one or more of the following:

a data stream, a transmission occasion or a resource block (RB) set, or a physical uplink shared channel (PUSCH); and

the second information includes one or more of the following:
a PUSCH port, a sounding reference signal (SRS) port, or a demodulation reference signal (DMRS) port.

In an embodiment, determining the first information and/or the second information based on the SRI field and/or the TPMI field in the DCI includes:
determining third information based on the SRI field and/or the TPMI field, where the third information includes at least one of the following:

the first information;

the second information;

second information corresponding to SRI indication and/or TPMI indication;

second information corresponding to a transmission configuration indication (TCI) state or a spatial relation; or

second information corresponding to the first information.

In an embodiment, determining the third information based on the SRI field and/or the TPMI field includes one or more of the following:

based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or

in case that the SRI field in the DCI indicates multiple SRS resource sets, determining first information respectively corresponding to each SRS resource set among the multiple SRS resource sets based on the multiple SRS resource sets; or

based on precoders respectively indicated by multiple TPMI fields, determining first information corresponding to each of the precoders respectively indicated by the multiple TPMI fields; or

based on multiple TCI states or spatial relations, determining first information respectively corresponding to each TCI state or spatial relation of the multiple TCI states or spatial relations; or

based on multiple precoders, determining first information respectively corresponding to each precoder of the multiple precoders, where each of the multiple precoders corresponds to each of the multiple SRS resources, or the multiple precoders are indicated by TPMI fields or TPMI indications respectively corresponding to the multiple SRS resources; or

based on multiple SRS resources or TPMIs indicated by the network side through an information field in the DCI or a higher layer parameter, determining first information respectively corresponding to each SRS resource or TPMI of the multiple SRS resources or TPMIs.

In an embodiment, based on the SRS resources indicated by the multiple SRI fields or the TPMI indications corresponding to SRS resources indicated by the multiple SRI fields, determining the first information respectively corresponding to each SRS resource in the SRS resources indicated by the multiple SRI fields or the first information respectively corresponding to each TPMI indication in the TPMI indications corresponding to the SRS resources indicated by the multiple SRI fields includes:
determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, where the first SRI field and the second SRI field are SRI fields in the multiple SRI fields.

In an embodiment, determining the first information respectively corresponding to each SRS resource set among the multiple SRS resource sets based on the multiple SRS resource sets includes:
determining a first subgroup of first information corresponding to a first SRS resource set, and a second subgroup of first information corresponding to a second SRS resource set, where the first SRS resource set and the second SRS resource set are SRS resource sets among the multiple SRS resource sets.

In an embodiment, based on the precoders respectively indicated by the multiple TPMI fields, determining the first information corresponding to each of the precoders respectively indicated by the multiple TPMI fields includes:
determining a first subgroup of first information corresponding to the precoders indicated by a first TPMI field, and a second subgroup of first information corresponding to the precoders indicated by a second TPMI field, where the first TPMI field and the second TPMI field are TPMI fields among the multiple TPMI fields.

In an embodiment, based on the multiple TCI states or spatial relations, determining the first information respectively corresponding to each TCI state or spatial relation of the multiple TCI states or spatial relations includes:
determining a first subgroup of first information corresponding to a first TCI state or spatial relation, and a second subgroup of first information corresponding to a second TCI state or spatial relation, where the first TCI state or spatial relation and the second TCI state or spatial relation are TCI states or spatial relations among the multiple TCI states or spatial relations.

In an embodiment, based on the multiple precoders, determining the first information respectively corresponding to each precoder of the multiple precoders includes:
determining a first subgroup of first information corresponding to a first precoder, and a second subgroup of first information corresponding to a second precoder, where the first precoder and the second precoder are precoders among the multiple precoders.

In an embodiment, the first subgroup of the first information and the second subgroup of the first information satisfy one or more of the following:

a first subgroup of the first information is a first subgroup of data streams, and a second subgroup of the first information is a second subgroup of data streams; or

a first subgroup of the first information is a first subgroup of transmission occasions, and a second subgroup of the first information is a second subgroup of transmission occasions; or

a first subgroup of the first information is a first RB set subgroup of RB sets, and a second subgroup of the first information is a second RB set subgroup of RB sets; or

a first subgroup of the first information is a first PUSCH subgroup of PUSCHs, and a second subgroup of the first information is a second PUSCH subgroup of PUSCHs.

In an embodiment, determining the third information based on the SRI field and/or the TPMI field further includes: determining a PUSCH port, where the PUSCH port includes at least one of the following:

a union of PUSCH ports determined by the first subgroup of the first information and PUSCH ports determined by the second subgroup of the first information;

a cascade of PUSCH ports determined by the first subgroup of the first information and PUSCH ports determined by the second subgroup of the first information;

a PUSCH port with a larger number of ports among PUSCH ports determined by the first subgroup of the first information and PUSCH ports determined by the second subgroup of the first information; or

PUSCH ports determined by the first subgroup of the first information and PUSCH ports determined by the second subgroup of the first information being the same or partially the same.

In an embodiment, determining the first information and/or the second information based on the SRI field and/or the TPMI field in the DCI includes:

determining that multiple subgroups of the first information use a same spatial relation or transmission configuration indication (TCI) state, where an SRS resource indicated by the SRI field has one spatial relation or TCI state, or an SRS resource indicated by the SRI field corresponds to one SRI field and/or TPMI field; or

determining second information respectively corresponding to multiple spatial relations or transmission configuration indication (TCI) states.

In an embodiment, determining that the multiple subgroups of the first information use the same spatial relation or TCI state includes one or more of the following:

determining that a first subgroup of data streams and a second subgroup of data streams use the same spatial relation or TCI state; or

determining that a first transmission occasion subgroup of transmission occasions and a second transmission occasion subgroup of transmission occasions use the same spatial relation or TCI state; or

determining that a first RB set subgroup of RB sets and a second RB set subgroup of RB sets use the same spatial relation or TCI state; or

determining that a first PUSCH subgroup of PUSCHs and a second PUSCH subgroup of PUSCHs use the same spatial relation or TCI state.

In an embodiment, determining second information respectively corresponding to multiple spatial relations or TCI states includes one or more of the following:

determining a number of data streams or a number of DMRS ports or a number of PUSCH ports corresponding to a k-th spatial relation or TCI state based on an indicator from the network side; or

determining a 1/K data stream or antenna port corresponding to each spatial relation or TCI state of the multiple spatial relations or TCI states based on a predefined rule; or

determining data streams corresponding to each spatial relation or TCI state of the multiple spatial relations or TCI states based on an association between a spatial relation or TCI state and a code division multiplexing (CDM) group; or

determining antenna port indicator fields corresponding to each spatial relation or TCI state of the multiple spatial relations or TCI states based on multiple antenna port indicator fields, where K spatial relations or TCI states correspond to M antenna port indicator fields, and in case that K and M are the same, the spatial relations or TCI states and the antenna port indicator field are in one-to-one correspondence, and K and M are positive integers,

where K is a number of the spatial relations or TCI states, and k is an index value of one of the K spatial relations or TCI states.

In an embodiment, a number of first SRS resource sets configured by the network side is greater than 1.

In an embodiment, a number of first SRS resource sets configured by the network side is 1.

In an embodiment, the method further includes:

determining a target transmission mode; and

switching to the target transmission mode,

where the target transmission mode includes any of the following:
a space division multiplexing (SDM) transmission, a frequency division multiplexing (FDM) transmission, a single frequency network (SFN) transmission, or a time division multiplexing (TDM) transmission.

An embodiment of the present application further provides a terminal, including a memory, a transceiver and a processor,
where the memory is used for storing a computer program, the transceiver is used for receiving and transmitting data under control of the processor, and the processor is used for reading the computer program in the memory and perform steps of the method for determining the information described above.

An embodiment of the present application further provides a processor-readable storage medium, where the processor-readable storage medium stores a computer program, the computer program is used for causing a processor to perform steps of the method for determining the information described above.

In the methods and apparatuses for determining the information provided by the embodiment of the present application, based on the SRI field and/or the TPMI field in the DCI transmitted from the network side, one or more of the data stream, the transmission occasions, the RB sets or the PUSCHs, and one or more of the PUSCH ports, the SRS ports or the DMRS ports are determined for precoding of the uplink transmission, and the uplink transmission is ensured to be performed.

BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a schematic flowchart of a method for determining information according to an embodiment of the present application;

FIG. 2 is a schematic structural diagram of a terminal according to an embodiment of the present application; and

FIG. 3 is a schematic structural diagram of an apparatus for determining information according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

Embodiments of the present application provide methods and apparatuses for determining information, to ensure uplink transmission.

The methods and the apparatuses are based on the same conception. Since the principles of solving the problem by the methods and the apparatuses are similar, the implementation of the apparatuses and the methods may be referred to each other, and the repetition is not repeated.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

First, the following content is introduced:

In the related art, a terminal may only select one antenna panel for uplink transmission at one time. In future communication systems, each terminal may be configured with multiple antenna panels.

(1) Uplink panel selection in the related art

Before transmission starts, the terminal may report a panel-related capability set index, which may also be abbreviated to as capability. Each capability includes the maximum supported number of sounding reference signal (SRS) ports. The numbers of SRS ports corresponding to any two capabilities are different. A network side device may determine the number of panels of SRS ports own by a terminal based on a capability reported by the terminal. For example, in case that the terminal owns three panels, which have two, two, and four SRS antenna ports respectively, the terminal may report two capabilities, which correspond to two SRS ports and four SRS ports respectively.

In the related art, the capability reported by the terminal may only be used for beam measurement reporting. During performing L1-reference signal received power (RSRP) or L1-signal-to-noise and interference ratio (SINR), the terminal would carry a capability when reporting each channel state information-reference signal (CSI-RS) resource indicator (CRI)/SRS resource indicator (SRI) and corresponding L1-RSRP or L1-SINR is used, where the capability represents that which panel this measurement value is measured by.

(2) Repetition transmission of a physical uplink shared channel (PUSCH) based on codebook and non-codebook in the related art

In the related art, during uplink multi-transmission reception point (TRP) transmission, the terminal may use the same or different panels to transmit the same PUSCH or physical uplink control channel (PUCCH) to two TRPs at two or more transmission occasions, that is, repetition transmission is performed through time division multiplexing (TDM). Two or more repetition transmission versions are scheduled by the same downlink control information (DCI) (i.e., single DCI). A definition of panel is not introduced.

A specific procedure is as follows.

First, a network side configures an SRS resource set based on codebook or non-codebook transmission for a user equipment (UE). The number of SRS resource sets is 1 or 2, and each SRS resource set contains one or more SRS resources. The UE transmits SRS resources configured by the network side using different panels. The network side measures the SRS resources transmitted from the UE, and indicates precoding information required by subsequent PUSCH repetition transmission through an SRI and/or a precoding information and number of layers (TPMI).

A specific procedure of precoding information indication (including the SRI indication and TPMI indication) is as follows.

In codebook-based PUSCH transmission, the network side device may configure one or two SRS resource sets for the terminal. Each SRS resource set corresponds to one TRP, and contains at least one SRS resource. When one SRS resource set is configured, it represents a single TRP transmission. The network side device indicates an SRS resource in the SRS resource set through an SRI field in the DCI, and uses a TPMI field to indicate a precoder applied to the SRS resource indicated by the SRI field. After receiving the SRI indication and the TPMI indication, the terminal uses an antenna port, which is the same as the SRS resource indicated by the SRI field, to transmit a PUSCH. When two SRS resource sets are configured, the DCI would contain an SRS resource set indicator, to indicate the terminal of using which SRS resource set and a corresponding usage sequence, as shown in table 1. When using two SRS resource sets, the terminal transmits two PUSCHs in a mode of TDM based on indicators of two SRI fields and two TPMI fields respectively.

Table 1: SRS resource set indicator

| Bit field mapping to index | SRS resource set indicator |
|---|---|
| 0 | The first SRI field and the first TPMI field are associated with a first SRS resource set, and the second SRI field and the second TPMI field are reserved. |
| 1 | The first SRI field and the first TPMI field are associated with the second SRS resource set, and the second SRI field and the second TPMI field are reserved. |
| 2 | The first SRI field and the first TPMI field are associated with the first SRS resource set, and second SRI field and the second TPMI field and the second SRS resource set are reserved. |
| 3 | The first SRI field and the first TPMI field are associated with the first SRS resource set, and second SRI field and the second TPMI field and the second SRS resource set are reserved. |

In non-codebook-based PUSCH transmission, the network side device may also configure one or two SRS resource sets for the terminal. Each SRS resource set corresponds to one TRP. Each SRS resource has only one port, and corresponds to one piece of data steam for PUSCH transmission. When one SRS resource set is configured, it represents a single TRP transmission. There is no TPMI field in the DCI. The SRI field is used for indicating SRS resources, transmission precoding and stream number association information. In an embodiment, the SRI field indicates one or more SRS resources. After receiving the SRI, the terminal uses an antenna port, which is the same as the SRS resource indicated by the SRI field, to transmit a PUSCH. When two SRS resource sets are configured, an SRS resource set indicator in the DCI (as shown in table 1) is also used for indicating the terminal of using which SRS resource set and a corresponding usage sequence. When using two SRS resource sets, the terminal transmits two PUSCHs in the mode of TDM based on indicators of two SRI fields.

For multi-TRP multi-panel transmission, there is no corresponding solution about the network side using single DCI to schedule the terminal in PUSCH space division multiplexing (SDM) transmission, frequency division multiplexing (FDM) transmission, and single frequency network (SFN) scenarios. Embodiments of the present application provide methods and apparatuses for determining information, which are performed by the UE to determine each transmission layer, data stream, transmission occasion or resource block (RB) set, or antenna port used by the PUSCH, spatial relation, or transmission configuration indication (TCI) state or other information based on an indicator from the network side.

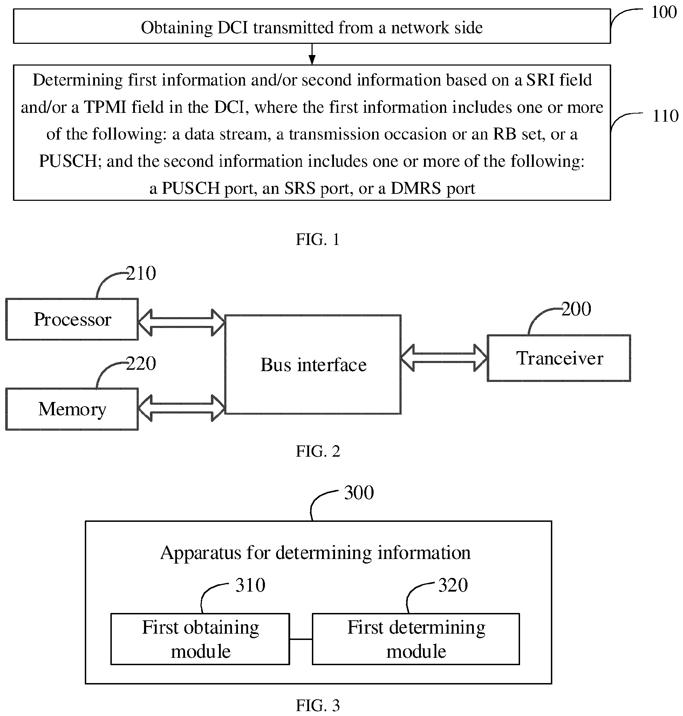

FIG. 1 is a schematic flowchart of a method for determining information according to an embodiment of the present application. The method for determining the information may be performed by a terminal. The method includes the following steps.

Step 100: obtaining downlink control information (DCI) transmitted from a network side.

Step 110: determining first information and/or second information based on a sounding reference signal resource indicator (SRI) field and/or a precoding information and number of layers (TPMI) field in the DCI,

where the first information includes one or more of the following:

a data stream, a transmission occasion or a resource block (RB) set, or a physical uplink shared channel (PUSCH); and

the second information includes one or more of the following:
a PUSCH port, a sounding reference signal (SRS) port, or a demodulation reference signal (DMRS) port.

In an embodiment, in order to ensure that a UE may determine the precoding information for uplink transmission, the terminal may receive DCI from the network side and determine one or more of the data stream, the transmission occasion, the RB set, the PUSCH, the PUSCH port, the SRS port, or the DMRS port based on the DCI.

It should be noted that determining the first information based on the SRI field and/or the TPMI field in the DCI may refer to: determining which pieces of first information the indicated SRI field or TPMI field acts on respectively, for example, act on which data stream or resources.

It should be noted that in various embodiments of the present application, the terms "first" and "second" are only to distinguish nouns and have no other substantive meanings. Similarly, the terms "first one" and "second one" are also only to distinguish nouns and have no other substantive meanings.

In an embodiment, the solution for simultaneous transmission of multiple panels may be that multiple panels of the UE perform transmission in a mode of SDM through different spatial data layers. The data layer is equivalent to data stream (i.e., layer).

First, the network side may configure an SRS resource set based on codebook or non-codebook transmission for the UE. The SRS resource set contains one or more SRS resources. The UE may use different panels to transmit on the SRS resources configured on the network side. the network side may measure the SRS resources transmitted from the UE to determine which panel or panels are used by the terminal for subsequent SDM-based PUSCH transmission, and indicate the precoding information required for subsequent PUSCH transmission through the SRI indication and/or the TPMI indication.

In codebook-based PUSCH transmission, the PUSCH port is the same as the SRS port indicated by the SRI field, and is different from the DMRS port. The PUSCH port and the DMRS port correspond to the numbers of ports after precoding and before precoding respectively. When the PUSCH performs SDM transmission, different transmission layers may be transmitted, by different panels, corresponding to the number of DMRS ports. Without noise consideration, after precoding processing, a received signal y on the network side may be expressed as:

$$y = H_1 W_1 x_1 + H_2 W_2 x_2.$$

$x_1$ and $x_2$ are data stream transmitted from the two panels respectively, $W_1$ and $W_2$ are precoding matrices of the data stream $x_1$ and $x_2$, and $H_1$ and $H_2$ are channels between the network side and the two panels, that is, channels passed through during transmitting the PUSCH. The sum of stream numbers of $x_1$ and $x_2$ corresponds to the number of the DMRS ports. $x_1$ and $x_2$ may come from the same codeword or different codewords. When mapping a codeword to the data stream, $x_1$ and $x_2$ may be mapped jointly (that is, one codeword is mapped to the data stream corresponding to $x_1$ and $x_2$ respectively), or be mapped independently (that is, one codeword is mapped to the data stream corresponding to $x_1$, and the other codeword is mapped to the data stream corresponding to $x_2$). The embodiments of the present application do not limit these.

There are two modes to understand a logical port of the PUSCH. One understanding mode is that the PUSCH port corresponding to the data stream $x_1$ is different from the PUSCH port corresponding to the data stream $x_2$. For example, the PUSCH ports corresponding to the data stream $x_1$ and the data stream $x_2$ are 0-3 and 4-5 respectively, that is, four ports and two ports. The other understanding mode is that the PUSCH port corresponding to the data stream $x_1$ and the PUSCH port corresponding to the data stream $x_2$ are the same or partially the same. For example, the PUSCH ports corresponding to the data stream $x_1$ and the data stream $x_2$ are 0-3 and 0-1 (or 2-3) respectively, that is, four ports and two ports. The network side and UE should have the same understanding mode for the logical port of the PUSCH.

When the PUSCHs transmitted by two panels are processed as different PUSCHs, for example, when $x_1$ and $x_2$ correspond to different codewords, the PUSCHs may be regarded as two different PUSCHs; or when $x_1$ and $x_2$ are transmitted to different TRPs, the PUSCHs may be regarded as two different PUSCHs, the two PUSCHs may be defined as different ports or the same port, and the TRP only receives one PUSCH; or when the PUSCHs transmitted by two panels are transmitted to the same TRP or come from the same codeword, the two PUSCHs may be defined as the same or partially the same logical ports.

In an embodiment, the solution for simultaneous transmission of multiple panels may be SFN transmission. The UE may use multiple spatial relations or TCI states to transmit the PUSCH on one time-frequency resource. Each SRS port or PUSCH port or DMRS port corresponds to multiple spatial relations or TCI states.

First, the network side may configure an SRS resource set based on codebook or non-codebook transmission for the UE. The SRS resource set contains one or more SRS resources. The SRS resource set contains one or more SRS resources. Each SRS resource has one or more spatial relations or TCI states. The UE may use different panels to transmit on the SRS resources configured on the network side. The network side may measure the SRS resources transmitted from the UE to determine which panel or panels are used by the terminal for subsequent SFN-based PUSCH transmission, and indicate the precoding information required for subsequent PUSCH transmission through the SRI indication and/or the TPMI indication.

In an embodiment, the solution for simultaneous transmission by multiple panels may be FDM transmission. Different RBs may be used to transmit the same PUSCH (that is, different versions of one transport block (TB)), or different RBs may be used to transmit different parts of the same TB, to increase the reliability of transmission.

First, the network side may configure an SRS resource set based on codebook or non-codebook transmission for the UE. The SRS resource set contains one or more SRS resources. The SRS resource set contains one or more SRS resources. Each SRS resource has one or more spatial relations or TCI states. The UE may use different panels to transmit on the SRS resources configured on the network side. the network side may measure the SRS resources transmitted from the UE to determine which panel or panels are used by the terminal for subsequent FDM-based PUSCH transmission, and indicate subsequent transmission occasions or RB groups or the precoding information required by repeated versions through the SRI indication and/or the TPMI indication.

In an embodiment, in case that a target transmission mode of uplink transmission scheduled this time is SDM transmission, the first information may include data stream.

In an embodiment, in case that a target transmission mode of uplink transmission scheduled this time is FDM transmission, the first information may include a transmission occasion or a RB set.

In an embodiment, in case that a target transmission mode of uplink transmission scheduled this time is neither SDM transmission, nor FDM transmission, for example, in case that multiple pieces of DCI schedule a PUSCH respectively, the first information may include the PUSCH.

In all embodiments of the present application, a spatial relation or TCI state of an SRS resource may refer to: a spatial relation configured by the network side for the SRS resource or an SRS resource indicated by the SRI field, or a TCI state configured or indicated for an uplink channel/signal or uplink and downlink channel/signal by using radio resource control (RRC) signaling and/or media access control control element (MAC-CE) signaling and/or a TCI indicator field in the DCI.

In the method for determining the information provided by the embodiment of the present application, based on the SRI field and/or the TPMI field in the DCI transmitted from the network side, one or more of the data streams, the transmission occasions, the RB sets or the PUSCHs, and one or more of the PUSCH ports, the SRS ports or the DMRS ports are determined for precoding of the uplink transmission, and the uplink transmission is ensured to be performed.

In an embodiment, determining the first information and/or the second information based on the SRI field and/or the TPMI field in the DCI includes:

determining third information based on the SRI field and/or the TPMI field, where the third information includes at least one of the following:

the first information;

the second information;

second information corresponding to SRI indication and/or TPMI indication;

second information corresponding to a transmission configuration indication (TCI) state or a spatial relation; or

second information corresponding to the first information.

In an embodiment, in the related technology, the network side only uses one SRI field and one TPMI field to indicate precoding association information, and the UE cannot determine which data stream (DMRS ports) or which PUSCH ports use which spatial relations or TCI states to perform transmission. Besides, it is also necessary to clarify which DMRS ports and which PUSCH ports correspond to the same spatial relation or TCI state.

Therefore, for a case of using multiple SRI fields and/or multiple TPMI fields, it is also necessary to determine a correspondence between the SRI and/or the TPMI and the second information, a correspondence between the TCI state or spatial relation and the second information, and a correspondence between the first information (such as data stream) and second information. The number of the first SRS resource set configured by the network side may be greater than 1 or equal to 1.

For example, for the case of using multiple SRI fields and/or multiple TPMI fields, it is also necessary to determine correspondences between indicators of multiple SRI fields or TPMI fields and antenna ports indicated by the data stream or an antenna port indicator field.

In an embodiment, determining the third information based on the SRI field and/or the TPMI field includes one or more of the following:

based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or

in case that the SRI field in the DCI indicates multiple SRS resource sets, determining first information respectively corresponding to each SRS resource set among the multiple SRS resource sets based on the multiple SRS resource sets; or

based on precoders respectively indicated by multiple TPMI fields, determining first information corresponding to each of the precoders respectively indicated by the multiple TPMI fields; or

based on multiple TCI states or spatial relations, determining first information respectively corresponding to each TCI state or spatial relation of the multiple TCI states or spatial relations; or

based on multiple precoders, determining first information respectively corresponding to each precoder of the multiple precoders, where each of the multiple precoders corresponds to each of the multiple SRS resources, or the multiple precoders are indicated by TPMI fields or TPMI indications respectively corresponding to the multiple SRS resources; or

based on multiple SRS resources or TPMIs indicated by the network side through an information field in the DCI or a higher layer parameter, determining first information respectively corresponding to each SRS resource or TPMI of the multiple SRS resources or TPMIs.

In an embodiment, the UE may determine correspondences between multiple subgroups of the first information indicated by the SRI or the TPMI and the second information.

A specific mode may include at least one of the following.

Option 1: the corresponding first information is determined based on the SRS resource indicated by the SRI field or the TPMI indication corresponding to the SRS resource.

Option 2: the corresponding first information is determined based on the SRS resource set.

Option 3: the corresponding first information is determined based on the precoder indicated by the TPMI field.

Option 4: the corresponding first information is determined based on the TCI state or the spatial relation.

Option 5: the corresponding first information is determined based on the SRS resource or the TPMI field corresponding to the SRS resource or the precoder indicated by the TPMI.

Option 6: the corresponding first information is determined based on the SRS resources or the TPMI configured or indicated by the network side through an information field in the DCI or a higher layer parameter configuredGrantConfig.

The number of the first SRS resource set configured by the network side may be greater than 1 or equal to 1.

For an example, the first information being the data stream is taken as an example, and a specific mode for the UE to determine a correspondence between the precoder indicated by the SRI or the TPMI (that is, the indicated multiple pieces of data stream) and the DMRS port or the PUSCH port may be at least one of the following.

Option 1: the corresponding data stream is determined based on the SRS resource indicated by the SRI field or the TPMI indication corresponding to the SRS resource.

Option 2: the corresponding data stream is determined based on the SRS resource set.

Option 3: the corresponding data stream is determined based on the precoder indicated by the TPMI field.

Option 4: the corresponding data stream is determined based on the TCI state or the spatial relation.

Option 5: the corresponding data stream is determined based on the SRS resource or the TPMI field corresponding to the SRS resource or the precoder indicated by the TPMI.

Option 6: the corresponding data stream or the antenna port is determined based on the SRS resources or the TPMI configured or indicated by the network side through an information field in the DCI or a higher layer parameter configuredGrantConfig.

For the SRS resources or the TPMI configured or indicated by the network side through the information field in the DCI or the higher layer parameter configuredGrantConfig, the corresponding data stream or antenna port may be determined.

For example, 1 bit may be used for indicating: the SRS resource or the TPMI indicated by the first SRI field (such as the first SRI field) corresponds to a lower data stream or port, and the SRS resource or the TPMI indicated by the second SRI field (such as the second SRI field) corresponds to a higher data stream or port; or the SRS resource or the TPMI indicated by the first SRI field corresponds to a higher data stream or port, and the SRS resource or the TPMI indicated by the second SRI field corresponds to a lower data stream. Other similar correspondence indication modes may be deduced in the same way, and the repetition is not repeated.

Alternatively, it may indicate: only the SRS resource or the TPMI indicated by the first SRI field is used for transmission, which corresponds to lower data stream or port, or corresponds to all indicated data stream or ports; or it may indicate that only the SRS resource or the TPMI indicated by the second SRI field is used for transmission, which corresponds to a lower data stream or port, or corresponds to all indicated data stream or ports. Other similar correspondence indication modes may be deduced in the same way, and the repetition is not repeated.

Alternatively, it may indicate the SRIs/the TPMIs/the TCI states corresponding to a first codeword and a second codeword respectively. Correspondingly, the UE may determine the SRI/the TPMI/the TCI, etc. corresponding to the data stream corresponding to the first codeword or the second codeword. Other similar correspondence indication modes may be deduced in the same way, and the repetition is not repeated.

In an embodiment, when the port for PUSCH transmission is determined, the PUSCH port may be a union of ports indicating two SRI resources. For example, in case that a port indicated by one SRI field is 0-3 (four ports), and a port indicated by the other SRI field is 0-1 (two ports), the PUSCH port may be a union of the two ports, that is, 0-3.

In an embodiment, when the port for PUSCH transmission is determined, the number of PUSCH ports may be a sum of the ports indicated by the two SRI fields, that is, the number of PUSCH ports is 6. A relationship between the PUSCH port and the SRI indication/the TPMI indication/the TCI indication may be determined by, similarly, the correspondence between the SRI indication or the TPMI indication and the antenna port indicated by the antenna port indicator field described above, only the port indicated by the port indicator field having the PUSCH port needs to be replaced, and the repetition is not repeated.

In an embodiment, for non-codebook-based PUSCH transmission, each SRS resource may correspond to one or two spatial relations or TCI states. The UE may determine the port and the spatial relation or TCI state used for PUSCH transmission based on indications of the first SRI field or the second SRI field, and transmission of up to four spatial relations or TCI states may be supported. The correspondence between the SRS resource indicated by the SRI field and the DMRS port or the PUSCH port is necessary to be determined, which may be determined based on the above option 1, option 2, option 4, option 5, or option 6.

In an embodiment, for non-codebook-based PUSCH transmission, if each SRS resource has one spatial relation, the spatial relations between each data stream (DMRS port) and the PUSCH port may be determined based on an indicator of the SRI field. If the TCI state of the SRS resource is indicated through the TCI field, two or more TCI states may be indicated for the SRS resource in the SRS resource set, and TCI states corresponding to each data layer may be determined by referring to codebook-based PUSCH transmission.

In an embodiment, for codebook-based PUSCH transmission, it is necessary to determine the correspondence between the SRS resource indicated by the SRI field and the DMRS port or the PUSCH port, which may be determined based on the above option 1 to option 6.

In an embodiment, based on the SRS resources indicated by the multiple SRI fields or the TPMI indications corresponding to SRS resources indicated by the multiple SRI fields, determining the first information respectively corresponding to each SRS resource in the SRS resources indicated by the multiple SRI fields or the first information respectively corresponding to each TPMI indication in the TPMI indications corresponding to the SRS resources indicated by the multiple SRI fields includes:

determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, where the first SRI field and the second SRI field are SRI fields in the multiple SRI fields.

In an embodiment, when determining the corresponding first information based on the SRS resource indicated by the SRI field or the TPMI indication corresponding to the SRS resource, it may be determined that the SRS resource indicated by the first SRI field or the TPMI indication corresponding to the SRS resource corresponds to the first subgroup of the first information, the SRS resource indicated by the second SRI field or the TPMI indication corresponding to the SRS resource corresponds to the second subgroup of the first information, an SRS resource indicated by a third SRI field or a TPMI indication corresponding to the SRS resource corresponds to a third subgroup of the first information, an SRS resource indicated by a fourth SRI field or a TPMI indication corresponding to the SRS resource corresponds to a fourth subgroup of the first information, and so on. The number of the first SRS resource sets configured by the network side may be greater than or equal to 1.

In an embodiment, a minimum value of all data stream indexes of the second subgroup of the first information is higher than a maximum value of all data stream indexes of the first subgroup of the first information. For example, in SDM transmission, a data stream index of the second subgroup is $N_1 \sim (v - 1)$ layer, and a data stream index of the first subgroup is $0 \sim (N_1 - 1)$ layer.

In an embodiment, any data stream indexes of the second subgroup of the first information is higher than any data stream index of the first subgroup of the first information.

In an embodiment, an average value of the data stream indexes of the second subgroup of the first information is higher than an average value of the data stream indexes of the first subgroup of the first information.

In an embodiment, a minimum value of all data stream indexes of the second subgroup of the first information is higher than a minimum value of all data stream indexes of the first subgroup of the first information.

In an embodiment, a maximum value of all data stream indexes of the second subgroup of the first information is higher than a maximum value of all data stream indexes of the first subgroup of the first information.

In an embodiment, the second subgroup of the first information is the same as the first subgroup of the first information. For example, in SFN transmission, the first SRI field and the second SRI field act on the same data stream. For example, if the precoder indicated by the first SRI field is W1, and the precoder indicated by the second SRI field is W2, the terminal uses W1+W2 to transmit the PUSCH.

The first information being the data stream is taken as an example in the following.

The TPMI indication corresponding to the SRS resource corresponding to the first SRI field may correspond to a lower layer (such as $0 \sim (N_1 - 1)$ layer), and the TPMI indication corresponding to the SRS resource corresponding to the second SRI field may correspond to a higher layer (such as $N_1 \sim (v - 1)$ layer).

The SRS resource set field in the DCI may also be used to dynamically change an association between the first SRI field or the second SRI field and the SRS resource set, thereby changing a correspondence between the data stream and the SRS resource.

Table 1 is taken as an example. If the indicator of the SRS resource set field is '2', it may represent that the SRI field and the TPMI field are associated with the first SRS resource set, and the second SRI field and the second TPMI field are associated with the second SRS resource. Correspondingly, the TPMI indication corresponding to the SRS resource in the first SRS resource set corresponds to the lower layer, and the TPMI indication corresponding to the SRS resource in the second SRS resource set corresponds to the higher layer. If the indication of the SRS resource set field is '1', it represents that the SRI field or the TPMI field is associated with the second SRS resource set, that is, the TPMI indication corresponding to the SRS resource in the second SRS resource set corresponds to the lower layer or all layers, rather than using the TPMI indication corresponding to the SRS resource in the first SRS resource set for transmission, that is, it is in the reserved state. It is only single TRP transmission.

Since the SRS resource set field is designed for TDM repetition transmission of PUSCH, when the indicators of the SRS resource set field are '2' and '3', PUSCH mapping behaviors are different, and associations between the SRI field and the SRS resource set are the same. In order to facilitate SDM transmission, a correspondence between the TRP or the panel and the transport layer may be dynamically changed. When the indicator of the SRS resource set field is '3', the association relationship between the SRI field or the second SRI field and the SRS resource set may also be changed. That is, indicators in table 2 may be used.

Table 2: SRS resource set indicator

| Bit field mapping to index | SRS resource set indicator |
|---|---|
| 0 | The first SRI field and the first TPMI field are associated with the first SRS resource set, and the second SRI field and the second TPMI field are reserved. |

(continued)

| Bit field mapping to index | SRS resource set indicator |
|---|---|
| 1 | The first SRI field and the first TPMI field are associated with the second SRS resource set, and the second SRI field and the second TPMI field are reserved. |
| 2 | The first SRI field and the first TPMI field are associated with the first SRS resource set, and the second SRI field and the second TPMI field are associated with the second SRS resource set. |
| 3 | The first SRI field and the first TPMI field are associated with the second SRS resource set, and second SRI field and second TPMI field are associated with the first SRS resource set. |

In an embodiment, the indicators in table 1 may also be used. When the indicators of the SRS resource set field are '2' or '3', the UE behavior at this time is defined as: the indicator of the SRI field or the TPMI field corresponds to a lower layer, and the indicator of the second SRI field or the second TPMI field corresponds to a higher layer; or the indicator of the SRI field or the TPMI field corresponds to a higher layer, and the indicator of the second SRI field or the second TPMI field corresponds to a lower layer.

In an embodiment, determining the first information respectively corresponding to each SRS resource set among the multiple SRS resource sets based on the multiple SRS resource sets includes:
determining a first subgroup of first information corresponding to a first SRS resource set, and a second subgroup of first information corresponding to a second SRS resource set, where the first SRS resource set and the second SRS resource set are SRS resource sets among the multiple SRS resource sets.

In an embodiment, when determining the corresponding first information based on the SRS resource set, it may be determined that the first SRS resource set corresponds to the first subgroup of the first information, the second SRS resource set may correspond to the second subgroup of the first information, a third SRS resource set may correspond to the third subgroup of the first information, a fourth SRS resource set may correspond to the fourth subgroup of the first information, and so on. The number of the first SRS resource set configured by the network side may be greater than or equal to 1.

The first information being the data stream is taken as an example in the following.

The first SRS resource set may correspond to a lower layer, and the second SRS resource set may correspond to a higher layer.

The first SRS resource set may refer to: an SRS resource set with a lower srs-ResourceSetId index value in SRS resource sets with usage set to 'codebook' configured for DCI format 0_1 or 0_2. Correspondingly, the second SRS resource set may refer to: an SRS resource set with a higher srs-ResourceSetId index value.

In an embodiment, the used SRS resource set may be determined through the SRS resource set field or other information fields. For example, in case that the SRS resource set field indicates '0', it represents that the SRI field or the TPMI field is associated with the first SRS resource set, that is, the second SRS resource set is not transmitted, and the first SRS resource set corresponds to all layers. Correspondingly, in case that the SRS resource set field indicates '1', it represents that the second SRS resource set corresponds to all layers.

In the embodiment of the present application, the association between the SRS resource and the DMRS antenna port is established, and the association between the TPMI and the DMRS antenna port is indirectly established by using the association between the TPMI indication and the SRI indication.

In an embodiment, based on the precoders respectively indicated by the multiple TPMI fields, determining the first information corresponding to each of the precoders respectively indicated by the multiple TPMI fields includes:
determining a first subgroup of first information corresponding to the precoders indicated by a first TPMI field, and a second subgroup of first information corresponding to the precoders indicated by a second TPMI field, where the first TPMI field and the second TPMI field are TPMI fields among the multiple TPMI fields.

In an embodiment, when determining the corresponding first information based on the precoder indicated by the TPMI field, the precoder indicated by the first TPMI field may correspond to the first subgroup of the first information, the precoder indicated by the second TPMI field may correspond to the second subgroup of the first information, a precoder indicated by a third TPMI field may correspond to the third subgroup of the first information, and a precoder indicated by a fourth TPMI field may correspond to the fourth subgroup of the first information, and so on. The number of the first SRS resource set configured by the network side may be greater than or equal to 1.

The first information being the data stream is taken as an example in the following.

The precoder indicated by the first TPMI field may correspond to a lower layer, and the precoder indicated by the second TPMI field may correspond to a higher layer.

In an embodiment, the correspondence with the data stream is determined directly based on the TPMI field.

The first TPMI field and the second TPMI field may be respectively the TPMI field or the second TPMI field in the DCI or, the parameters precodingAndNumberOfLayers or precodingAndNumberOfLayers-r18 configured under the higher layer parameter configuredGrantConfig, etc., which are not limited here.

In an embodiment, the first TPMI or the second TPMI may be two TPMIs determined based on a TPMI joint encoding rule, or may be a TPMI indicating a small number of layers and a TPMI indicating a large number of layers.

In the embodiment of the present application, the association between the TPMI field or the TPMI indication and the DMRS antenna port may be directly established.

In an embodiment, based on the multiple TCI states or spatial relations, determining the first information respectively corresponding to each TCI state or spatial relation of the multiple TCI states or spatial relations includes: determining a first subgroup of first information corresponding to a first TCI state or spatial relation, and a second subgroup of first information corresponding to a second TCI state or spatial relation, where the first TCI state or spatial relation and the second TCI state or spatial relation are TCI states or spatial relations among the multiple TCI states or spatial relations.

In an embodiment, when determining the corresponding first information based on the TCI state or spatial relation, it may be determined that the first TCI state or spatial relation corresponds to the first subgroup of the first information, the second TCI state or spatial relation corresponds to the second subgroup of the first information, a third TCI state or spatial relation corresponding to the third subgroup of the first information, and a fourth TCI state or spatial relation corresponds to the fourth subgroup of the first information, and so on. The number of the first SRS resource set configured by the network side may be greater than or equal to 1.

The first information being the data stream is taken as an example in the following.

The first TCI state or spatial relation may correspond to a lower layer, and the second TCI state or spatial relation may correspond to a higher layer.

In an embodiment, an association between an SRI field (such as the first SRI field and the second SRI field, or multiple SRI fields) or a TPMI field (such as the first TPMI field and the second TPMI field, or multiple TPMI fields) or an antenna port indicator field (such as a first antenna port indicator field and a second antenna port indicator field or multiple antenna port indicator fields), and a TCI state may be established.

For example, an SRI field or an SRS resource or a TPMI field is associated with a first spatial relation or TCI state, and the other SRI field or the other SRS resource or another TPMI field is associated with a second spatial relation or TCI state association.

For example, when performing indication of the TCI, it may be further indicated that which TCI of multiple TCIs being effective is equivalent to indicating switching the TRP or the panel. It may be a newly defined information field, or it may be a reused SRS resource set field, which dynamically changes the correspondence between the SRI field/the SRS resource/the TPMI indication and the spatial relation or TCI state. When part of the TCI states is indicated to be ineffective, the corresponding SRI field or the TPMI field or the antenna port indicator field also becomes ineffective accordingly. Therefore, the data stream indicated by the effective information field corresponds to all data stream indicated by the antenna port indicator field.

In an embodiment, based on the multiple precoders, determining the first information respectively corresponding to each precoder of the multiple precoders includes:
determining a first subgroup of first information corresponding to a first precoder, and a second subgroup of first information corresponding to a second precoder, where the first precoder and the second precoder are precoders among the multiple precoders.

In an embodiment, when determining the corresponding first information based on the SRS resource or the TPMI field or the TPMI corresponding to the SRS resource, it may be determined that a precoder indicated by a first SRS resource or the TPMI field or the TPMI corresponding to a first SRS resource set corresponds to the first subgroup of the first information, a precoder indicated by a second SRS resource or the TPMI field or the TPMI corresponding to a second SRS resource set corresponds the second subgroup of the first information, a precoder indicated by a third SRS resource or the TPMI field or the TPMI corresponding to a third SRS resource set corresponds the third subgroup of the first information, and a precoder indicated by a fourth SRS resource or the TPMI field or the TPMI corresponding to a fourth SRS resource set corresponds to the fourth subgroup, and so on. The number of the first SRS resource set configured by the network side may be greater than or equal to 1.

The first information being the data stream is taken as an example in the following.

The precoding indicated by the first SRS resource or the TPMI field or the TPMI corresponding to the first SRS resource may correspond to lower data stream or port, such as $0 \sim (N_1 - 1)$ layer, and the precoding indicated by the second SRS resource or the TPMI field or the TPMI corresponding to the second SRS resource may correspond to higher data stream or ports, such as $N_1 \sim (v - 1)$ layer.

In an embodiment, the first SRS resource and the second SRS resource may be an SRS resource with a lower SRS resource index (ID value) and an SRS resource with a higher SRS resource index (ID value), respectively, or may be an SRS resource with a smaller number of SRS ports and an SRS resource with a larger number of SRS ports (ID value), etc. respectively, which are not limited here.

In an embodiment, the association between the SRS resource and the DMRS antenna port is established, and the association between the TPMI and the DMRS antenna port is indirectly established by using the association between the TPMI indication and the SRI indication.

In an embodiment, the first subgroup of the first information and the second subgroup of the first information satisfy one or more of the following:

a first subgroup of the first information is a first subgroup of data streams, and a second subgroup of the first information is a second subgroup of data streams; or

a first subgroup of the first information is a first subgroup of transmission occasions, and a second subgroup of the first information is a second subgroup of transmission occasions; or

a first subgroup of the first information is a first RB set subgroup of RB sets, and a second subgroup of the first information is a second RB set subgroup of RB sets; or

a first subgroup of the first information is a first PUSCH subgroup of PUSCHs, and a second subgroup of the first information is a second PUSCH subgroup of PUSCHs.

In an embodiment, in case that the first information is data stream, the first subgroup of the first information is the first subgroup of data streams, and the second subgroup of the first information is the second subgroup of data streams

In an embodiment, in case that the first information is a transmission occasion, the first subgroup of the first information is the first transmission occasion subgroup of transmission occasions, and the second subgroup of the first information is the second transmission occasion subgroup of transmission occasions.

In an embodiment, in case that the first information is an RB set, the first subgroup of the first information is the first RB set subgroup of RB sets, and the second subgroup of the first information is the second RB set subgroup of RB sets.

In an embodiment, in case that the first information is a PUSCH, the first subgroup of the first information is the first PUSCH subgroup of PUSCHs, and the second subgroup of the first information is the second PUSCH subgroup of PUSCHs.

In an embodiment, the same precoding indication mode may be defined for different transmission schemes, such as SDM, FDM, SFN or TDM, to facilitate the network side to schedule the terminal to dynamically switch between multiple modes. During dynamically switching between different schemes, the indicator of the SRI or the TPMI field may act on the subgroup of data streams, the subgroup of RB sets, the subgroup of PUSCHs or the subgroup of transmission occasions respectively.

In an embodiment, determining the third information based on the SRI field and/or the TPMI field further includes: determining a PUSCH port, where the PUSCH port includes at least one of the following:

a union of PUSCH ports determined by the first subgroup of the first information and PUSCH ports determined by the second subgroup of the first information;

a cascade of PUSCH ports determined by the first subgroup of the first information and PUSCH ports determined by the second subgroup of the first information;

a PUSCH port with a larger number of ports among PUSCH ports determined by the first subgroup of the first information and PUSCH ports determined by the second subgroup of the first information; or

PUSCH ports determined by the first subgroup of the first information and PUSCH ports determined by the second subgroup of the first information being the same or partially the same.

In an embodiment, the union of the PUSCH ports determined by the first subgroup and the PUSCH ports determined by the second subgroup may be a union of the PUSCH ports (the PUSCH ports determined by the first subgroup) having indexes of {1, 2, 3, 4} and the PUSCH ports (the PUSCH ports determined by the second subgroup) having indexes of { 1, 2}, or may be the PUSCH ports having indexes of {1, 2, 3, 4}.

In an embodiment, a cascade of the PUSCH ports determined by the first subgroup and the PUSCH ports determined by the second subgroup may be a union of the PUSCH ports (the PUSCH ports determined by the first subgroup) having indexes of {1, 2, 3, 4} and the PUSCH ports (the PUSCH ports determined by the second subgroup) having indexes of { 1, 2}, or may be the PUSCH ports having indexes of {1, 2, 3, 4, 5, 6}.

In an embodiment, determining the first information and/or the second information based on the SRI field and/or the TPMI field in the DCI includes:

determining that multiple subgroups of the first information use a same spatial relation or transmission configuration indication (TCI) state, where an SRS resource indicated by the SRI field has one spatial relation or TCI state, or an SRS resource indicated by the SRI field corresponds to one SRI field and/or TPMI field; or

determining second information respectively corresponding to multiple spatial relations or transmission configuration indication (TCI) states.

For example, if the SRS resource indicated by the SRI field has one spatial relation or TCI state, it represents that the network side indicates the UE to use a single panel for transmission, or indicates the UE to use multiple panels to transmit PUSCH to the same TRP. That is, multiple subgroups of the first information of the PUSCH are all transmitted using the same spatial relation or TCI state.

For example, in case that one SRI/TPMI indication acts on the first information, if the SRS resource indicated by the SRI field has one spatial relation or TCI state, it represents that the network side indicates the UE to use a single panel for transmission, or indicates the UE to use multiple panels to transmit PUSCH to the same TRP. That is, multiple subgroups of the first information of the PUSCH are all transmitted using the same spatial relation or TCI state.

For example, if the SRS resource indicated by the SRI field has multiple spatial relations or TCI states, such as two spatial relations or TCI states, it may represent that the PUSCH port, the SRS port, and the DMRS port all need to be transmitted by using multiple spatial relations or TCI states.

In an embodiment, determining that the multiple subgroups of the first information use the same spatial relation or TCI state includes one or more of the following:

determining that a first subgroup of data streams and a second subgroup of data streams use the same spatial relation or TCI state; or

determining that a first transmission occasion subgroup of transmission occasions and a second transmission occasion subgroup of transmission occasions use the same spatial relation or TCI state; or

determining that a first RB set subgroup of RB sets and a second RB set subgroup of RB sets use the same spatial relation or TCI state; or

determining that a first PUSCH subgroup of PUSCHs and a second PUSCH subgroup of PUSCHs use the same spatial relation or TCI state.

In an embodiment, if the SRS resource indicated by the SRI field has one spatial relation or TCI state, it represents that the network side indicates the UE to use a single panel for transmission, or indicates the UE to use multiple panels to transmit PUSCH to the same TRP. That is, multiple data streams of the PUSCHs are transmitted using the same spatial relation or TCI state. For example, the first subgroup of data streams and the second subgroup of data streams use the same spatial relation or TCI state.

In an embodiment, if the SRS resource indicated by the SRI field has one spatial relation or TCI state, it represents that the network side indicates the UE to use a single panel for transmission, or indicates the UE to use multiple panels to transmit PUSCH to the same TRP. That is, multiple transmission occasions of the PUSCHs all use the same spatial relation or TCI state for transmission. For example, the first transmission occasion subgroup and the second transmission occasion subgroup use the same spatial relation or TCI state.

In an embodiment, if the SRS resource indicated by the SRI field has one spatial relation or TCI state, it represents that the network side indicates the UE to use a single panel for transmission, or indicates the UE to use multiple panels to transmit PUSCH to the same TRP. That is, RB sets of the PUSCHs all use the same spatial relation or TCI state for transmission. For example, the first RB set subgroup and the second RB set subgroup use the same spatial relation or TCI state.

In an embodiment, if the SRS resource indicated by the SRI field has one spatial relation or TCI state, it represents that the network side indicates the UE to use a single panel for transmission, or indicates the UE to use multiple panels to transmit PUSCH to the same TRP. That is, multiple PUSCHs of the PUSCHs all use the same spatial relation or TCI state for transmission. For example, the first PUSCH subgroup and the second PUSCH subgroup use the same spatial relation or TCI state.

In an embodiment, determining second information respectively corresponding to multiple spatial relations or TCI states includes one or more of the following:

determining a number of data streams or a number of DMRS ports or a number of PUSCH ports corresponding to a k-th spatial relation or TCI state based on an indication from the network side; or

determining a 1/K data stream or antenna port corresponding to each spatial relation or TCI state of the multiple spatial relations or TCI states based on a predefined rule; or

determining data streams corresponding to each spatial relation or TCI state of the multiple spatial relations or TCI states based on an association between a spatial relation or TCI state and a code division multiplexing (CDM) group; or

determining antenna port indicator fields corresponding to each spatial relation or TCI state of the multiple spatial relations or TCI states based on multiple antenna port indicator fields, where K spatial relations or TCI states correspond to M antenna port indicator fields, and in case that K and M are the same, the spatial relations or TCI states and the antenna port indicator field are in one-to-one correspondence, and K and M are positive integers,

where K is a number of the spatial relations or TCI states, and k is an index value of one of the K spatial relations or TCI states.

In an embodiment, at least one of the following modes may be used to determine the second information corresponding to multiple spatial relations or TCI states.

Option 1: the network side may dynamically indicate the number of data streams or the number of DMRS ports or the number of PUSCH ports corresponding to the k-th spatial relation or TCI state. K is the number of the spatial relations or TCI states, and k is the index value of one of K spatial relations or TCIs.

For example, when the SRS indicated by the SRI field has two spatial relations or TCI states, or the TCI state association information indicates two TCI states, the network side may indicate that the first spatial relation or TCI state corresponds to two data streams or two DMRS ports.

In an embodiment, the UE may calculate the number of data streams or the number of DMRS ports corresponding to the second spatial relation or TCI state based on the total number of data streams indicated by the antenna port indicator field.

When the SRS indicated by the SRI field has more than two (such as K) spatial relations or TCI states, or the TCI state association information indicates more than two (such as K) TCI states, the network side may indicate the k-th (where k=0, 1, 2, ..., K-1) spatial relations or TCI states correspond to $N_k$ data stream or $N_k$ DMRS ports.

In an embodiment, the UE may calculate the number of data streams or the number of DMRS ports corresponding to the K-th spatial relation or TCI state based on the total number of data streams indicated by the antenna port indicator field.

The above is only for illustrative explanation. The network side indicates the number of data streams corresponding to part of the spatial relations or TCI states. The first to the (K-1)-th spatial relations or TCI states indicated by the network side, or the second to the K-th spatial relations or TCI states indicated by the network side are both available, which is not limited by the embodiments of the present application.

In an embodiment, a new information field in DCI signaling may be used to indicate the number of data streams or the number of antenna ports corresponding to the spatial relation or TCI state, or it may be jointly coded with a TCI indicator field or the antenna port indicator field or other information fields in the DCI.

For example, one item is added to the information corresponding to each code point (such as '001' or '10', etc.) in the antenna port information field to indicate the number of data streams or antenna ports indicated by the code point.

In an embodiment, after the UE determines the number of data streams or DMRS ports corresponding to each spatial relation or TCI state, which spatial relations correspond to which data stream or DMRS antenna ports may be determined based on an indication order of the spatial relation or TCI state and an indication order of antenna port indicator field.

For example, four antenna ports may be indicated, namely port 0, port 1, port 6, and port 7. The first spatial relation or TCI state may correspond to two antenna ports. The UE may determine that the first spatial relation or TCI state corresponds to port 0 and port 1, and the second spatial relation or TCI state corresponds to port 6 and port 7.

In the embodiment of the present application, the UE may determine that the PUSCH ports corresponding to different data layers are the same, and then determine that each PUSCH port is transmitted using multiple spatial relations or TCI states, which may be similar to the SFN transmission mode.

In an embodiment, the UE may determine that the PUSCH ports corresponding to different data layers are different. The network side may further indicate the PUSCH port corresponding to the k-th spatial relation or TCI state, this indication mode may refer to the data stream indication mode, and the repetition is not repeated. The UE may determine the number of PUSCH antenna ports corresponding to other unindicated TCI states or spatial relations based on the total number of PUSCH ports (the same as the number of SRS ports indicated in the SRI field).

Option 2: the UE may determine the number of data streams/antenna ports corresponding to 1/K for each spatial relation based on a predefined rule.

In an embodiment, certain restrictions may be made when scheduling, such as each panel transmitting indicated 1/K data stream. When the antenna port indicates four ports, that is, corresponding to four data streams, and indicates two spatial relations or TCI states, the first two data streams is transmitted using the first spatial relation or TCI state, and the last two data streams is transmitted using the second spatial relation or TCI state. The sequence is determined based on an order of the antenna ports indicated by the antenna port indicator field.

In the embodiment of the present application, the UE may determine that the PUSCH ports corresponding to different data layers are the same, and then determine that each PUSCH port is transmitted using multiple spatial relations or TCI states, which is similar to the SFN transmission mode.

In an embodiment, the UE may determine that the PUSCH ports corresponding to different data layers are different. Similarly, the number of PUSCH ports corresponding to each data stream is also 1/K of the total number of PUSCH ports (the number of SRS ports indicated by the SRI field).

Option 3: an association between the spatial relation or TCI state and the CDM group may be established. The UE may determine the data stream corresponding to the spatial relation or TCI state from the association relationship.

For example, the n-th spatial relation or TCI state and the n-th CDM group indicated by the antenna port may be associated.

For example, the ports indicated by the antenna port indicator field are 0, 1 and 2. 0 and 1 correspond to one CDM group and 2 corresponds to another CDM group. Therefore, the UE may determine the spatial relation or TCI state used by antenna port 0 and antenna port 1 is the first spatial relation or TCI state indicated by the network side, and the spatial relation or TCI state used by antenna port 2 is the second spatial relation or TCI state indicated by the network side.

A determination mode of the PUSCH port may be referred to the aforementioned option 1 and option 2.

Option 4: the network side may indicate through two or more antenna port indicator fields. Each antenna port indicator field may correspond to one or more spatial relations or TCI states.

In an embodiment, the two antenna port indicator fields may also correspond to two codewords, that is, each codeword indicates the antenna port respectively.

In this case, the total number of transmission data stream or DMRS ports is the sum of the port numbers indicated by all antenna port indicator fields.

For example, the first antenna port indicator field indicates port 0 and port 1, and the second antenna port indicator field indicates port 6 and port 7. Therefore, the UE may use port 0, port 1, port 6 and port 7 to transmit PUSCHs, where port 0 and port 1 correspond to the first spatial relation or TCI state, and port 6 and port 7 correspond to the second spatial relation or TCI state.

When K spatial relations or TCI states and K antenna port indicator fields are indicated, the antenna ports and spatial relations or TCI states are in one-to-one correspondence.

When K spatial relations or TCI states and K/2 antenna port indicator fields are indicated, each antenna port indicator field corresponds to two spatial relations or TCI states. When K/2 spatial relations or TCI states and K antenna port indicator fields are indicated, every two antenna port indicator fields correspond to one spatial relation or TCI state.

In an embodiment, the number of antenna port indicator fields is configured by a higher layer parameter.

In an embodiment, when there are two antenna port indicator fields, the corresponding information fields in the DCI are one antenna port indicator field and a second antenna port indicator field. When there are more than two antenna port indicator fields, the corresponding information fields in the DCI may be one antenna port indicator field, a second antenna port indicator field, a third antenna port indicator field, and so on.

In an embodiment, the one-to-one correspondence between the spatial relation or TCI state and the antenna port indicator field may refer that the first TCI corresponds to one port indicator field, the second TCI corresponds to a second port indicator field, and so on.

In each of the above modes, only association relationships between each data stream or DMRS antenna port and the spatial relation or TCI state are required to be determined. The terminal determines the TCI state corresponding to the PUSCHs by itself based on precoding operation. The present application does not make limitation on these, and the UE may use the same PUSCH port for transmission, or may use different PUSCH ports for transmission.

When the SRI field indicates multiple SRS resources, the multiple SRS resources are in a form of joint encoding.

$$\left\lceil \log_2\left( \sum_{k=1}^{\min\{L_{max}, N_{SRS}\}} \binom{N_{SRS}}{k} \right) \right\rceil$$

For example, a bit width of the SRI field is , where $N_{SRS}$ is the number of SRS resources configured in the SRS resource set, and $L_{max}$ is the maximum number of data stream. When two SRS resources are indicated, the PUSCH uses the same antenna port as the two SRS resources for transmission.

Correspondingly, two TPMI fields or two TPMI may also be used for joint coding, which indicate the precoding matrices used by the two SRS resources respectively. Two groups of data stream are determined based on two TPMI fields or two TPMIs, and each group contains $N_1$ data stream and $N_2$ data stream respectively. Each group of data stream corresponds to one or more spatial relations or TCI states. $N_1 + N_2 = v$, where $v$ is the total number of antenna ports indicated by one or more antenna port indicator fields.

In an embodiment, in the above embodiments, the number of the first SRS resource set configured by the network side may be greater than 1.

In an embodiment, the network side may configure multiple SRS resource sets for the UE, where each SRS resource has one or more spatial relations or TCI states.

For example, the network side may configure two SRS resource sets for the UE, where each SRS resource has one or two spatial relations or TCI states. The network side may indicate the precoding information for PUSCH transmission by using two SRI fields and/or two TPMI fields in the DCI.

For example, the network side may configure two, three or four SRS resource sets for the UE, where each SRS resource has one spatial relation or TCI state. The network side may indicate the precoding information for PUSCH transmission by using multiple SRI fields and/or multiple SRS resources in the DCI, or may indicate multiple SRS resources or TPMI indications by using one SRI field and/or one TPMI field.

In an embodiment, the network side being able to configure two SRS resource sets for the UE is taken as an example. In codebook-based PUSCH transmission, the two SRS resource sets may respectively correspond to two TRPs or two panels or two links between the TRPs and the panels. In case that each SRS resource has one spatial relation or TCI state, the network side may indicate the UE to use two TCI states for PUSCH transmission through two SRI fields. In case that each SRS resource has two spatial relations or TCI states, the network side may indicate the UE to use up to four TCI states for PUSCH transmission through two SRI fields.

For example, the network side may configure four SRS resource sets for the UE, where each SRS resource has one or two spatial relations or TCI states, and the precoding information transmitted in the PUSCH is indicated through two SRI fields and/or two TPMI fields in the DCI.

Four SRS resource sets may each correspond to one link between the TRP and the panel. For example, if two TRPs (TRP 1 and TRP 2) are deployed on the network side and the UE uses two panels (panel 1 and panel 2), the four SRS resource sets respectively correspond to a link of TRP 1&panel 1, a link of TRP 1&panel 2, a link of TRP 2&panel 1 and a link of TRP 2&panel 2.

In an embodiment, multiple SRS resource sets are configured to facilitate the network side performing dynamic switching between multiple transmission schemes.

In an embodiment, among multiple SRS resource sets, each SRS resource set may be associated with one panel. The SRS resources in the SRS resource set may have the same number of ports, such as two or four.

In an embodiment, the network side may indicate one SRS resource, from each SRS resource set, for transmission, and there may be multiple SRI fields.

For example, when the number of SRS resource sets is two, the network side may use two SRI fields to indicate two SRS resources, and the number of ports for the SRS resources may be the same or different.

For example, if the number of ports for one SRS resource is two and the number of ports for the other SRS resource is four, the UE may use the union of ports for the two SRS resources to transmit the PUSCH. The spatial relation or TCI state of the PUSCH port is also the union of the spatial relation or TCI state of the indicated SRS resources.

In an embodiment, one TPMI field may be used for precoding indication, and the TPMI field acts on one specified SRS resource, such as an SRS resource with multiple ports, or an SRS resource within one specific SRS resource set, or an SRS resource with a lower or higher SRS resource index, etc.

In an embodiment, the SRS resource set may also correspond to different TRPs, and the SRS resources in the SRS resource set may have different ports. When the network side configures the UE for SFN transmission, it may also limit the SRS resources indicated by multiple SRI fields to have the same number of ports, to simplify the subsequent procedure of determining the spatial relation or TCI state of the PUSCH port or the DMRS port.

In an embodiment, in the above embodiments, the number of the first SRS resource set configured by the network side may be equal to 1.

When the network side indicates the UE to use one SRS resource set for transmission, for example, through the SRS resource set field, it is equivalent to the UE using one single panel to transmit to a single TRP.

In an embodiment, the network side may configure an SRS resource set for the UE, where each SRS resource has one or more spatial relations or TCI states. The precoding information transmitted in the PUSCH is indicated through one SRI field and/or one or more TPMI fields in the DCI.

For example, the network side configures one SRS resource set for the UE, where each SRS resource has one or two spatial relations or TCI states. The precoding information for PUSCH transmission is indicated through two SRI fields and/or two TPMI fields in the DCI.

For codebook-based PUSCH transmission, the SRI field may indicate one or more SRS resources. When indicating one SRS resource, the bit width of the SRI field is $\left\lceil \log_2\left(N_{\mathrm{SRS}}\right) \right\rceil$, where $N_{SRS}$ is the number of SRS resources configured in the SRS resource set. Correspondingly, the TPMI field may indicate the precoding matrix applied to the {0, ...,

(v-1)} layer on the SRS resource, where v is the number of DMRS ports indicated by the antenna port field. Correspondingly, the UE may use the same antenna port as the indicated SRS resource to transmit the PUSCH, and the port of the PUSCH is the same as the indicated port of the SRS resource.

For example, the network side may configure one SRS resource set for the UE, where each SRS resource has one or two or three or four spatial relations or TCI states. The precoding information transmitted in the PUSCH is indicated through one SRI field and/or one TPMI field in the DCI, which may be applied to SFN transmission.

For example, in SFN transmission, for codebook-based PUSCH transmission, the number of ports for the SRS resource in one SRS resource set may be different. The network side may use one SRI field to indicate one SRS resource. The SRS resource may have two ports or four ports. The precoding information corresponding to the SRS resource is indicated through the TPMI field.

For example, if the SRS resource indicated by the SRI field has one spatial relation or TCI, it represents that single TRP or single panel transmission is performed, and the indicated spatial relation or TCI state acts on all PUSCH ports or DMRS ports.

For example, if the SRS resource indicated by the SRI field has more than one spatial relations, it represents that multi-TRP or multi-panel SFN transmission is performed, and each PUSCH port or DMRS port uses the indicated multiple spatial relations or TCI states for transmission.

For non-codebook based PUSCH transmission, each SRS resource has one port, and the network side may use one SRI field to indicate one or more SRS resources. Similar to codebook-based transmission, each PUSCH port or DMRS port transmits uses one or more indicated spatial relations or TCI states for transmission.

For example, the network side configures one SRS resource set for the UE, where each SRS resource has one or two or three or four spatial relations or TCI states. The precoding information transmitted in the PUSCH is indicated through one SRI field and/or two or more TPMI fields (or two TPMI indications of one TPMI field). That is, the port for PUSCH transmission is only determined by one indicated SRS resource. For example, two panels use the spatial relation or TCI state of the indicated SRS resources to transmit the PUSCH respectively, the precoding matrices used by the two panels for transmission may be different, and two or more TPMI fields or precoders corresponding to the TPMI indication are used to transmit the PUSCH. The number of data streams indicated by two or more TPMI fields or TPMI indications is the same. For example, if the precoder indicated by one TPMI field corresponds to a rank of 4, the precoder indicated by the other TPMI field also corresponds to a rank of 4. Further, the terminal determines to perform four-stream data transmission. For each data stream, precoders respectively indicated by two TPMIs are used for precoding. For example, if the precoder indicated by the TPMI field is W1, and the precoder indicated by the second TPMI field is W2, the terminal uses W1+W2 to transmit the PUSCH.

In an embodiment, the method further includes:

determining a target transmission mode; and

switching to the target transmission mode,

where the target transmission mode includes any of the following:
a space division multiplexing (SDM) transmission, a frequency division multiplexing (FDM) transmission, a single frequency network (SFN) transmission, or a time division multiplexing (TDM) transmission.

In an embodiment, an RRC parameter may be used to configure the target transmission mode used by the UE. The target transmission mode includes SDM transmission, SFN transmission, TDM repetition transmission, or FDM repetition transmission, etc.

In an embodiment, when using a unified TCI framework, the TCI indicator field may dynamically switch between the multi-TRP transmission scheme and the single-point transmission scheme.

In the method for determining the information provided by the embodiment of the present application, based on the SRI field and/or the TPMI field in the DCI transmitted from the network side, one or more of the data streams, the transmission occasions, the RB sets or the PUSCHs, and one or more of the PUSCH ports, the SRS ports or the DMRS ports are determined for precoding of the uplink transmission, and the uplink transmission is ensured to be performed.

In an embodiment, SDM transmission is taken as an example. A solution for simultaneous transmission of multiple panels is that multiple panels of the UE transmit through different spatial data layers in a mode of SDM. The data layer is equivalent to the data stream (i.e. layer).

First, the network side configures an SRS resource set based on codebook or non-codebook transmission for the UE. The SRS resource set contains one or more SRS resources. The UE uses different panels to transmit on the SRS resources configured on the network side. the network side measures the SRS resources transmitted from the UE to determine which panel or panels are used by the terminal for subsequent SDM-based PUSCH transmission, and indicate the precoding information required for subsequent PUSCH transmission through the SRI and/or the TPMI.

In the related art, in codebook-based PUSCH transmission, the PUSCH port is the same as the SRS port indicated by the SRI field, and is different from the DMRS port. The PUSCH port and the DMRS port correspond to the numbers of ports after precoding and before precoding respectively. When the PUSCH performs SDM transmission, different transmission layers may be transmitted, by different panels, corresponding to the number of DMRS ports. Without noise consideration, after precoding processing, a received signal y on the network side may be expressed as:

$$y = H_1 W_1 x_1 + H_2 W_2 x_2,$$

where $x_1$ and $x_2$ are data streams transmitted from the two panels respectively, $W_1$ and $W_2$ are precoding matrices of the data streams $x_1$ and $x_2$, and $H_1$ and $H_2$ are channels between the network side and the two panels, that is, channels passed through during transmitting the PUSCH. The sum of stream numbers of $x_1$ and $x_2$ corresponds to the number of the DMRS ports. $x_1$ and $x_2$ may come from the same codeword or different codewords. When mapping a codeword to the data stream, $x_1$ and $x_2$ may be mapped jointly (that is, one codeword is mapped to the data stream corresponding to $x_1$ and $x_2$ respectively), or be mapped independently (that is, one codeword is mapped to the data stream corresponding to $x_1$, and the other codeword is mapped to the data stream corresponding to $x_2$). The embodiments of the present application do not limit these.

There are two modes to understand a logical port of the PUSCH. One understanding mode is that the PUSCH port corresponding to the data stream $x_1$ is different from the PUSCH port corresponding to the data stream $x_2$. For example, the PUSCH ports corresponding to the data stream $x_1$ and the data stream $x_2$ are 0-3 and 4-5 respectively, that is, four ports and two ports. The other understanding mode is that the PUSCH port corresponding to the data stream $x_1$ and the PUSCH port corresponding to the data stream $x_2$ are the same or partially the same. For example, the PUSCH ports corresponding to the data stream $x_1$ and the data stream $x_2$ are 0-3 and 0-1 (or 2-3) respectively, that is, four ports and two ports. The network side and UE should have the same understanding mode for the logical port of the PUSCH.

When the PUSCHs transmitted by two panels are processed as different PUSCHs, for example, when $x_1$ and $x_2$ correspond to different codewords, the PUSCHs may be regarded as two different PUSCHs; or when $x_1$ and $x_2$ are transmitted to different TRPs, the PUSCHs may be regarded as two different PUSCHs, the two PUSCHs may be defined as different ports or the same port, and the TRP only receives one PUSCH; or when the PUSCHs transmitted by two panels are transmitted to the same TRP or come from the same codeword, the two PUSCHs may be defined as the same or partially the same logical ports. In this embodiment, the precoding indication mode considers both the above two PUSCH port definition modes.

When SDM transmission is performed on PUSCH, at least one of the following precoding indication modes may be used.

Mode 1: the network side may configure one SRS resource set for the UE, where each SRS resource has one or more spatial relations or TCI states. The precoding information transmitted in the PUSCH is indicated through one SRI field and/or one or more TPMI fields in the DCI.

For codebook-based PUSCH transmission, the SRI field may indicate one or more SRS resources. When it indicates one SRS resource, the bit width of the SRI field is $\log_2(N_{SRS})$], where $N_{SRS}$ is the number of SRS resources configured in the SRS resource set. Correspondingly, the TPMI field would indicate the precoding matrix applied to the {0, ..., (v-1)} layer on the SRS resource, where v is the number of DMRS ports indicated by the antenna port field. Correspondingly, the UE would use the same antenna port as the indicated SRS resource to transmit the PUSCH, and the port of the PUSCH is the same as the indicated port of the SRS resource. It should be noted that in all embodiments of the present application, the mode of using the SRI field in the DCI to indicate SRS resources may also be simply extended to a case of using the higher layer parameter configuredGrantConfig to indicate SRS resources, that is, the case of configuring grant scheduling, and the corresponding precoding indication mode are the same.

If the SRS resource indicated by the SRI field has one spatial relation or TCI state, it represents that the network side indicates the UE to use a single panel for transmission, or indicates the UE to use multiple panels to transmit PUSCH to the same TRP. That is, multiple data streams of the PUSCHs are transmitted using the same spatial relation or TCI state. In all embodiments of the present application, the spatial relation or TCI state of SRS resources refers to a spatial relation configured by the network side for the SRS resource or an SRS resource indicated by the SRI field, or a TCI state configured or indicated for an uplink channel/signal or uplink and downlink channel/signal by using radio resource control (RRC) signaling and/or MAC-CE signaling and/or a TCI field in the DCI.

If the SRS resource indicated by the SRI field has multiple spatial relations or TCI states, such as two spatial relations or TCI states, it represents that the PUSCH port, the SRS port, and the DMRS port all need to be transmitted by using multiple spatial relations or TCI states. However, according to the mechanism of the related technology, the network side only uses one SRI field and one TPMI field to indicate precoding association information, and the UE cannot determine which data stream (DMRS ports) or which PUSCH ports use which spatial relations or TCI states to perform transmission. Besides, it is also necessary to clarify which DMRS ports and which PUSCH ports correspond to the same spatial relation or TCI state.

At least one of the following modes may be used to determine the spatial relation or TCI state of the DMRS port or the PUSCH ports/the SRS ports.

Option 1: the network side dynamically indicates the number of data streams or the number of DMRS ports or the number of PUSCH ports corresponding to the k-th spatial relation or TCI state.

For example, when the SRS indicated by the SRI field has two spatial relations or TCI states, or the TCI state association information indicates two TCI states, the network side may indicate that the first spatial relation or TCI state corresponds to two data streams or two DMRS ports. Further, the UE may calculate the number of data streams or the number of DMRS ports corresponding to the second spatial relation or TCI state based on the total number of data streams indicated by the antenna port indicator field.

When the SRS indicated by the SRI field has more than two (such as K) spatial relations or TCI states, or the TCI state association information indicates more than two (such as K) TCI states, the network side may indicate the k-th (where k=0, 1, 2, ..., K-1) spatial relations or TCI states correspond to $N_k$ data stream or $N_k$ DMRS ports. Further, the UE may calculate the number of data streams or the number of DMRS ports corresponding to the K-th spatial relation or TCI state based on the total number of data streams indicated by the antenna port indicator field. The above is only for schematic explanation. The network side indicates the number of data streams corresponding to part of the spatial relations or TCI states. The first to the (K-1)-th spatial relations or TCI states indicated by the network side, or the second to the K-th spatial relations or TCI states indicated by the network side are both available, which is not limited by the embodiments of the present application.

A new information field in DCI signaling may be used to indicate the number of data streams or the number of antenna ports corresponding to the spatial relation or TCI state, or it may be jointly coded with a TCI indicator field or the antenna port indicator field or other information fields in the DCI. For example, one item is added to the information corresponding to each code point (such as '001' or '10', etc.) in the antenna port information field to indicate the number of data streams or antenna ports indicated by the code point.

After the UE determines the number of data streams or DMRS ports corresponding to each spatial relation or TCI state, which spatial relations correspond to which data stream or DMRS antenna ports may be determined based on an indication order of the spatial relation or TCI state and an indication order of antenna port indicator field. For example, in case that the antenna port indicates 4 ports, namely port 0, port 1, port 6 and port 7, and further indicates that the first spatial relation or TCI state corresponds to two antenna ports, the UE may determine that the first spatial relation or TCI state corresponds to port 0 and port 1, and the second spatial relation or TCI state corresponds to port 6 and port 7.

The UE may determine that the PUSCH ports corresponding to different data layers are the same, and then consider that each PUSCH port is transmitted using multiple spatial relations or TCI states, that is, similar to the SFN transmission mode.

Or, the UE determines that the PUSCH ports corresponding to different data layers are different. The network side needs to further indicate the PUSCH port corresponding to the k-th spatial relation or TCI state, this indication mode is similar to the above data stream indication mode. The UE may determine the number of PUSCH antenna ports corresponding to other unindicated TCI states or spatial relations based on the total number of PUSCH ports (the same as the number of SRS ports indicated in the SRI field).

Option 2: the UE determines the number of data streams/antenna ports corresponding to 1/K for each spatial relation based on a predefined rule.

This mode is equivalent to making certain restrictions when scheduling, such as each panel transmitting indicated 1/K data stream. When the antenna port indicates four ports, that is, corresponding to four data streams, and indicates two spatial relations or TCI states, the first two data streams is transmitted using the first spatial relation or TCI state, and the last two data streams is transmitted using the second spatial relation or TCI state. The sequence is determined based on an order of the antenna ports indicated by the antenna port indicator field.

The UE may determine that the PUSCH ports corresponding to different data layers are the same, and then determine that each PUSCH port is transmitted using multiple spatial relations or TCI states, which is similar to the SFN transmission mode. It may also be determined that the PUSCH ports corresponding to different data layers are different. Similarly, the number of PUSCH ports corresponding to each data stream is also 1/K of the total number of PUSCH ports (the number of SRS ports indicated by the SRI field).

Option 3: an association between the spatial relation or TCI state and the CDM group is established. The UE may determine the data stream corresponding to the spatial relation or TCI state from the association relationship.

For example, the n-th spatial relation or TCI state and the n-th CDM group indicated by the antenna port are associated. For example, the ports indicated by the antenna port indicator field are 0, 1 and 2. 0 and 1 correspond to one CDM group and 2 corresponds to another CDM group. Therefore, the UE may determine the spatial relation or TCI state used by antenna port 0 and antenna port 1 is the first spatial relation or TCI state indicated by the network side, and the spatial relation or TCI state used by antenna port 2 is the second spatial relation or TCI state indicated by the network side.

The determination mode of the PUSCH port is similar to option 1 and option 2.

Option 4: it may be indicated through two or more antenna port indicator fields. Each antenna port indicator field corresponds to one or more spatial relations or TCI states.

The two antenna port indicator fields may also correspond to two codewords, that is, each codeword indicates the antenna port respectively.

In this case, the total number of transmission data stream or DMRS ports is the sum of the port numbers indicated by all antenna port indicator fields. For example, the first antenna port indicator field indicates port 0 and port 1, and the second antenna port indicator field indicates port 6 and port 7. Therefore, the UE would use port 0, port 1, port 6 and port 7 to transmit PUSCHs, where port 0 and port 1 correspond to the first spatial relation or TCI state, and port 6 and port 7 correspond to the second spatial relation or TCI state.

When K spatial relations or TCI states and K antenna port indicator fields are indicated, the antenna ports and spatial relations or TCI states are in one-to-one correspondence. When K spatial relations or TCI states and K/2 antenna port indicator fields are indicated, each antenna port indicator field corresponds to two spatial relations or TCI states. When K/2 spatial relations or TCI states and K antenna port indicator fields are indicated, every two antenna port indicator fields correspond to one spatial relation or TCI state. The number of antenna port indicator fields is configured by a higher layer parameter. When there are two antenna port indicator fields, the corresponding information fields in the DCI are a first antenna port indicator field and a second antenna port indicator field. When there are more than two antenna port indicator fields, the corresponding information fields in the DCI may be a first antenna port indicator field, a second antenna port indicator field, a third antenna port indicator field, and so on.

In each of the above modes, only association relationships between each data stream or DMRS antenna port and the spatial relation or TCI state are required to be determined. The terminal determines the TCI state corresponding to the PUSCHs by itself based on precoding operation. That is, the protocol does not make limitation on these, and the UE may use the same PUSCH port for transmission, or may use different PUSCH ports for transmission.

When the SRI field indicates multiple SRS resources, the multiple SRS resources are in a form of joint encoding.

For example, a bit width of the SRI field is $\left\lceil \log_2\left( \sum_{k=1}^{\min\{L_{max}, N_{SRS}\}} \binom{N_{SRS}}{k} \right) \right\rceil$, where $N_{SRS}$ is the number of SRS resources configured in the SRS resource set, and $L_{max}$ is the maximum number of data stream. When two SRS resources are indicated, the PUSCH uses the same antenna port as the two SRS resources for transmission. Correspondingly, two TPMI fields or two TPMI may also be used for joint coding, which indicate the precoding matrices used by the two SRS resources respectively. Two groups of data stream are determined based on two TPMI fields or two TPMIs, and each group contains $N_1$ data stream and $N_2$ data stream respectively. Each group of data stream corresponds to one or more spatial relations or TCI states. $N_1 + N_2 = v$, where $v$ is the total number of antenna ports indicated by one or more antenna port indicator fields.

The specific mode for determining the correspondence between the SRI indication or the TPMI indication and the antenna port indicated by the antenna port indicator field may be at least one of the following.

Option 1: the precoding indicated by the first TPMI field or the first TPMI corresponds to a lower data stream or port, such as $0 \sim (N_1 - 1)$ layer, the precoding indicated by the second TPMI field or the second TPMI corresponds to a higher data stream or port, such as $N_1 \sim (v - 1)$ layer.

The first TPMI field and the second TPMI field are respectively the TPMI field or the second TPMI field in the DCI or, the parameters precodingAndNumberOfLayers or precodingAndNumberOfLayers-r18 configured under the higher layer parameter configuredGrantConfig, etc.

The first TPMI or the second TPMI are two TPMIs determined based on a TPMI joint encoding rule, or are a TPMI indicating a small number of layers and a TPMI indicating a large number of layers.

In this mode, the association between the TPMI field or the TPMI and the DMRS antenna port is directly established.

Option 2: the precoding indicated by the TPMI field or the TPMI indication corresponding to the first SRS resource corresponds to lower data stream or port, such as $0 \sim (N_1 - 1)$ layer, and the precoding indicated by the TPMI field or the TPMI indication corresponding to the second SRS resource corresponds to a lower data stream or port corresponds to a higher data stream or port, such as $N_1 \sim (v - 1)$ layer.

The association between the SRS resource and the DMRS antenna port is established, and the association between the TPMI and the DMRS antenna port is indirectly established by using the association between the TPMI indication and the SRI indication.

The first SRS resource and the second SRS resource may be an SRS resource with a lower SRS resource index (ID value) and an SRS resource with a higher SRS resource index (ID value), respectively, or may be an SRS resource with a smaller number of SRS ports and an SRS resource with a larger number of SRS ports (ID value), respectively, etc.

Option 3: the network side configures or indicates the data stream or the antenna port corresponding to the SRS resource or the TPMI through an information field in the DCI or a higher layer parameter configuredGrantConfig.

For example, 1 bit is used to indicate that the first SRS resource or TPMI corresponds to a lower data stream or port, and the second SRS resource or TPMI corresponds to a higher data stream or port; or the first SRS resource or TPMI corresponds to higher data stream or port, and the second SRS resource or TPMI corresponds to lower data stream or port.

Alternatively, it is indicated that only the first SRS resource or TPMI is used for transmission, which corresponds to a lower data stream or port, or corresponds to all indicated data stream or ports; or it is indicated that only the second SRS resource or TPMI is used for transmission, which corresponds to a lower data stream or port, or corresponds to all indicated data stream or ports.

Alternatively, it is indicated that the SRIs/the TPMIs/the TCIs corresponding to a first codeword and a second codeword respectively. Correspondingly, the SRI/the TPMI/the TCI, etc. corresponding to the data stream corresponding to the first codeword or the second codeword may be determined.

For non-codebook-based PUSCH transmission, if each SRS resource has one spatial relation, the spatial relations between each data stream (DMRS port) and the PUSCH port may be determined based on an indicator of the SRI field. If the TCI state of the SRS resource is indicated through the TCI field, two or more TCI states may be indicated for the SRS resource in the SRS resource set, and TCI states corresponding to each data layer may be determined based on codebook-based PUSCH transmission mode.

Mode 2: the network side configures two SRS resource sets for the UE, where each SRS resource has one or two spatial relations or TCI states, and the precoding information for PUSCH transmission is indicated by using two SRI fields and/or two TPMI fields in the DCI.

In codebook-based PUSCH transmission, the two SRS resource sets may respectively correspond to two TRPs or two panels or two links between the TRPs and the panels. In case that each SRS resource has one spatial relation or TCI state, the network side may indicate the UE to use two TCI states for PUSCH transmission through two SRI fields. In case that there is an SRS resource has two spatial relations or TCI states, the network side may indicate the UE to use up to four TCI states for PUSCH transmission through two SRI fields. For the case of using two SRI fields and/or two TPMI fields, it is also necessary to determine correspondences between indicators of two SRI fields or TPMI fields and antenna ports indicated by the data stream or an antenna port indicator field.

The specific mode for determining the correspondence between the SRI indication or the TPMI indication and the antenna port indicated by the antenna port indicator field may be at least one of the following.

Option 1: the corresponding data stream is determined based on the first SRI field or the second SRI field.

For example, the TPMI indication corresponding to the SRS resource corresponding to the first SRI field (or SRI field) corresponds to a lower layer (such as $0\sim(N_1 - 1)$ layer), and the TPMI indication corresponding to the SRS resource corresponding to the second SRI field corresponds to a higher layer (such as $N_1\sim(v - 1)$ layer).

The SRS resource set field in PUSCH repetition transmission in the related technology may also be reused to dynamically change an association between the first SRI field or the second SRI field and the SRS resource set, thereby changing a correspondence between the data stream and the SRS resource. Table 1 is taken as an example. If the indicator of the SRS resource set field is '2', it represents that the SRI field and the TPMI field are associated with the first SRS resource set, and the second SRI field and the second TPMI field are associated with the second SRS resource. Correspondingly, the TPMI indication corresponding to the SRS resource in the first SRS resource set corresponds to the lower layer, and the TPMI indication corresponding to the SRS resource in the second SRS resource set corresponds to the higher layer. If the indication of the SRS resource set field is '1', it represents that the SRI field or the TPMI field is associated with the second SRS resource set, that is, the TPMI indication corresponding to the SRS resource in the second SRS resource set corresponds to the lower layer or all layers, rather than using the TPMI indication corresponding to the SRS resource in the first SRS resource set for transmission, that is, it is in the reserved state. It is only single TRP transmission.

Since the SRS resource set field is designed for PUSCH repetition transmission, when the indicators of the SRS resource set field are '2' and '3', PUSCH mapping behaviors are different, and associations between the SRI field and the SRS resource set are the same. In order to facilitate SDM transmission, a correspondence between the TRP or the panel and the transport layer may be dynamically changed. When the indicator of the SRS resource set field is '3', the association relationship between the first SRI field or the second SRI field and the SRS resource set may also be changed. That is, indicators in table 2 may be used.

Table 2: SRS resource set indicator

| Bit field mapping to index | SRS resource set indicator |
|---|---|
| 0 | The first SRI field and the first TPMI field are associated with the first SRS resource set, and the second SRI field and the second TPMI field are reserved. |
| 1 | The first SRI field and the first TPMI field are associated with the second SRS resource set, and the second SRI field and the second TPMI field are reserved. |

(continued)

| Bit field mapping to index | SRS resource set indicator |
| --- | --- |
| 2 | The first SRI field and the first TPMI field are associated with the first SRS resource set, and the second SRI field and the second TPMI field are associated with the second SRS resource set. |
| 3 | The first SRI field and the first TPMI field are associated with the second SRS resource set, and second SRI field and second TPMI field are associated with the first SRS resource set. |

Or the indicators in table 1 are still used. When the indicators of the SRS resource set field are '2' or '3', the UE behavior at this time is defined as: the indicator of the first SRI field or the first TPMI field corresponds to a lower layer, and the indicator of the second SRI field or the second TPMI field corresponds to a higher layer; or the indicator of the first SRI field or the first TPMI field corresponds to a higher layer, and the indicator of the second SRI field or the second TPMI field corresponds to a lower layer.

Option 2: the corresponding data stream is determined based on the SRS resource set.

For example, the first SRS resource set corresponds to a lower layer, and the second SRS resource set corresponds to a higher layer.

The first SRS resource set refers to an SRS resource set with a lower srs-ResourceSetId index value in SRS resource sets with usage set to 'codebook' configured for DCI format 0_1 or 0_2. Correspondingly, the second SRS resource set refers to an SRS resource set with a higher srs-ResourceSetId index value. The used SRS resource set may still be determined through the SRS resource set field or other information fields. For example, in case that the SRS resource set field indicates '0', it represents that the SRI field or the TPMI field is associated with the first SRS resource set, that is, the second SRS resource set is not transmitted, and the first SRS resource set corresponds to all layers. Correspondingly, in case that the SRS resource set field indicates '1', it represents that the second SRS resource set corresponds to all layers

Option 3: the data stream corresponding to the TPMI is determined based on the first TPMI field or the second TPMI field.

For example, the precoder indicated by the first TPMI field corresponds to a lower layer, and the precoder indicated by the second TPMI field corresponds to a higher layer. This scheme is similar to option 1, while in this scheme, the correspondence with the data stream is directly determined by the TPMI field, and in option 1, an association is established between the SRI field and the data stream, which is equivalent to indirectly establishing an association between the TPMI field and the data stream.

Option 4: the corresponding data stream is determined based on the TCI.

The first TCI state or spatial relation corresponds to a lower layer, and the second TCI state or spatial relation corresponds to a higher layer.

In an embodiment, an association between an SRI field (such as the first SRI field and the second SRI field, or multiple SRI fields) or a TPMI field (such as the first TPMI field and the second TPMI field, or multiple TPMI fields) or an antenna port indicator field (such as a first antenna port indicator field and a second antenna port indicator field or multiple antenna port indicator fields), and a TCI state may be established.

If an SRI field or an SRS resource or a TPMI field is associated with a first spatial relation or TCI state, the other SRI field or the other SRS resource or another TPMI field is associated with a second spatial relation or TCI state association.

For example, when performing indication of the TCI, it may be further indicated that which TCI of multiple TCIs being effective is equivalent to indicating switching the TRP or the panel. It may be a newly defined information field, or it may be a reused SRS resource set field, which dynamically changes the correspondence between the SRI field/the SRS resource/the TPMI indication and the spatial relation or TCI state. When part of the TCI state is indicated to be ineffective, the corresponding SRI field or the TPMI field or the antenna port indicator field also becomes ineffective accordingly. Therefore, the data stream indicated by the effective information field corresponds to all data stream indicated by the antenna port indicator field.

Option 5: the corresponding data stream is determined based on the indicated SRS resources.

For example, the precoding indicated by the TPMI field or the TPMI corresponding to the first SRS resource corresponds to lower data stream or port, such as $0 \sim (N_1 - 1)$ layer, and the precoding indicated by the TPMI field or the TPMI corresponding to the second SRS resource corresponds to higher data stream or port, such as $N_1 \sim (v - 1)$ layer.

The association between the SRS resource and the DMRS antenna port is established, and the association between the TPMI and the DMRS antenna port is indirectly established by using the association between the TPMI indication and the SRI indication.

The first SRS resource and the second SRS resource may be an SRS resource with a lower SRS resource index (ID value) and an SRS resource with a higher SRS resource index (ID value), or may be an SRS resource with a smaller number of SRS ports and an SRS resource with a larger number of SRS ports (ID value), etc.

Option 6: the network side configures or indicates the data stream or the antenna port corresponding to the SRS resource or the TPMI through an information field in the DCI or a higher layer parameter configuredGrantConfig.

For example, 1 bit is used to indicate that the first SRS resource or TPMI corresponds to a lower data stream or port, and the second SRS resource or TPMI corresponds to a higher data stream or port; or the first SRS resource or TPMI corresponds to a higher data stream or port, and the second SRS resource or TPMI corresponds to a lower data stream or port.

Alternatively, it is indicated that only the first SRS resource or TPMI is used for transmission, which corresponds to a lower data stream or port, or corresponds to all indicated data stream or ports; or it is indicated that only the second SRS resource or TPMI is used for transmission, which corresponds to a lower data stream or port, or corresponds to all indicated data stream or ports.

Alternatively, it is indicated that the SRIs/the TPMIs/the TCIs corresponding to a first codeword and a second codeword respectively. Correspondingly, the SRI/the TPMI/the TCI, etc. corresponding to the data stream corresponding to the first codeword or the second codeword may be determined.

When the port for PUSCH transmission is determined, the PUSCH port may be a union of ports two indicated SRI resources. For example, in case that a port indicated by one SRI field is 0-3 (four ports), and a port indicated by the other SRI field is 0-1 (two ports), the PUSCH port may be a union of the two ports, that is, 0-3. When determining the port for PUSCH transmission, the PUSCH port may also be a sum of the ports indicated by the two SRI fields, that is, the number of PUSCH ports is 6. A relationship between the PUSCH port and the SRI indication/the TPMI indication/the TCI may be determined by, similarly, the correspondence between the SRI or the TPMI and the antenna port indicated by the antenna port indicator field described above, and only the port indicated by the port indicator field having the PUSCH port needs to be replaced

For non-codebook-based PUSCH transmission, each SRS resource may correspond to one or two spatial relations or TCI states. The UE may determine the port and the spatial relation/TCI state used for PUSCH transmission based on indications of the first SRI field or the second SRI field, and transmission of up to four spatial relations or TCI states may be supported.

It is also necessary to determine the correspondence between the SRS resource indicated by the SRI field and the DMRS port or the PUSCH port. This is similar to the codebook-based mode, except that there is no TPMI-related impact, that is, codebook transmission based on option 1, option 2, option 4, option 5 and option 6 are all applicable.

Mode 3: the network side configures one SRS resource set for the UE, where each SRS resource has one or two spatial relations or TCI states. The precoding information for PUSCH transmission is indicated through two SRI fields and/or two TPMI fields in the DCI.

Similar to mode 2, except that the number of SRS resource set is 1. At this time, each SRS resource may correspond to different TRPs or panels or different links between the TRP and the panel. It is also necessary to determine the correspondence between the SRI indication/the TPMI indication and the DMRS port or the PUSCH port, where option 1, option 3, option 4, option 5 and option 6 in mode 2 are all applicable.

Mode 4: the network side may configure four SRS resource sets for the UE, where each SRS resource has one or two spatial relations or TCI states, and the precoding information transmitted in the PUSCH is indicated through two SRI fields and/or two TPMI fields in the DCI.

Four SRS resource sets may each correspond to one link between the TRP and the panel. For example, if two TRPs (TRP 1 and TRP 2) are deployed on the network side and the UE uses two panels (panel 1 and panel 2), the four SRS resource sets respectively correspond to a link of TRP 1&panel 1, a link of TRP 1&panel 2, a link of TRP 2&panel 1 and a link of TRP 2&panel 2.

It is also necessary to determine the correspondence between the SRI indication/the TPMI indication and the DMRS port or the PUSCH port, where option 1 to option 6 in mode 2 are all applicable. In particular, for option 1 and option 2, since the number of SRS resource sets has been increased to 4, the SRS resource set field in the DCI needs to consider a case of four SRS resource sets jointly operating, which requires an increase in DCI overhead. However, its basic principles are similar as option 1/option 2.

In an embodiment, SFN transmission is taken as an example.

In SFN transmission, the UE uses multiple spatial relations or TCI states to transmit the PUSCH on one time-frequency resource. Each SRS port or PUSCH port or DMRS port corresponds to multiple spatial relations or TCI states.

First, the network side configures an SRS resource set based on codebook-based or non-codebook-based transmission for the UE. The SRS resource set contains one or more SRS resources. Each SRS resource has one or more spatial relations or TCI states. The UE uses different panels to transmit the SRS resources configured on the network side. The network side measures the SRS resources transmitted from the UE to determine which panel or panels are used by the terminal for subsequent SFN-based PUSCH transmission, and indicate the precoding information required for subsequent PUSCH transmission through the SRI and/or the TPMI.

Mode 1: the network side configures one SRS resource set for the UE, where each SRS resource has one or two or three or four spatial relations or TCI states. The precoding information transmitted in the PUSCH is indicated through one SRI field and/or one TPMI field in the DCI, which may be applied to SFN transmission.

The SRS may be transmitted in a mode of SFN, which is consistent with the PUSCH transmission scheme, facilitates the network side to select an SRS resource that is more suitable for SFN transmission and indicate it to the UE.

For codebook-based PUSCH transmission, the number of ports for the SRS resource in one SRS resource set may be different. The network side may use one SRI field to indicate one SRS resource. The SRS resource may be two ports or four ports. The precoding information corresponding to the SRS resource is indicated through the TPMI field.

If the SRS resource indicated by the SRI field has one spatial relation or TCI, it represents that single TRP or single panel transmission is performed, and the indicated spatial relation or TCI state acts on all PUSCH ports or DMRS ports. If the SRS resource indicated by the SRI field has more than one spatial relation, it represents that multi-TRP or multi-panel SFN transmission is performed, and each PUSCH port or DMRS port uses the indicated multiple spatial relations or TCI states for transmission.

For non-codebook based PUSCH transmission, each SRS resource has one port, and the network side may use one SRI field to indicate one or more SRS resources. Similar to codebook-based transmission, each PUSCH port or DMRS port transmits uses one or more indicated spatial relations or TCI states for transmission.

Mode 2: the network side configures one SRS resource set for the UE, where each SRS resource has one or two or three or four spatial relations or TCI states. The precoding information transmitted in the PUSCH is indicated through one SRI field and/or two or more TPMI fields (or two TPMIs of one TPMI field). That is, the port for PUSCH transmission is only determined by one indicated SRS resource. For example, two panels use the spatial relation or TCI state of the indicated SRS resources to transmit the PUSCH respectively, the precoding matrices used by the two panels for transmission may be differently, and two or more TPMI fields or precoders corresponding to the TPMI are used to transmit the PUSCH. The number of data streams indicated by two or more TPMI fields or TPMIs is the same. For example, if the precoder indicated by one TPMI field corresponds to a rank of 4, the precoder indicated by the other TPMI field also corresponds to a rank of 4. Further, the terminal determines to perform four-stream data transmission. For each data stream, precoders respectively indicated by two TPMIs are used for precoding. For example, if the precoder indicated by the TPMI field is W1, and the precoder indicated by the second TPMI field is W2, the terminal uses W1+W2 to transmit the PUSCH.

Mode 3: the network side configures two, three or four SRS resource sets for the UE, where each SRS resource has one spatial relation or TCI state. The precoding information for PUSCH transmission is indicated by using multiple SRI fields and/or multiple SRS resources in the DCI, or multiple SRS resources or TPMIs are indicated by using one SRI field and/or one TPMI field.

The transmission framework is the same as the repetition transmission of PUSCH TDM, and has multiple SRS resource sets to facilitate the network side dynamically switching between multiple transmission schemes.

Each SRS resource set may be associated with one panel. The SRS resources in the SRS resource set may have the same number of ports, such as two or four.

The network side may indicate one SRS resource, from each SRS resource set, for transmission, and there may be multiple SRI fields. For example, when the number of SRS resource sets is two, the network side may use two SRI fields to indicate two SRS resources, and the number of ports of the SRS resources may be the same or different. For example, if the number of ports for one SRS resource is two and the number of ports for the other SRS resource is four, the UE may use the union of ports for the two SRS resources to transmit the PUSCH. The spatial relation or TCI state of the PUSCH port is also the union of the spatial relation or TCI state of the indicated SRS resources. One TPMI field may be used for precoding indication, and the TPMI field acts on one specified SRS resource, such as an SRS resource with multiple ports, or an SRS resource within one specific SRS resource set, or an SRS resource with a lower or higher SRS resource index, etc.

The SRS resource set may also correspond to different TRPs, and the SRS resources in the SRS resource set may have different ports. When the network side configures the UE for SFN transmission, it may also limit the SRS resources indicated by multiple SRI fields to have the same number of ports, to simplify the subsequent procedure of determining the spatial relation or TCI state of the PUSCH port or the DMRS port.

When the network side indicates the UE to use one SRS resource set for transmission, for example, through the SRS resource set field, it is equivalent to the UE using one single panel to transmit to a single TRP.

In an embodiment, FDM transmission is taken as an example.

Different RBs may be used to transmit the same PUSCH, that is, different versions of a TB. Or different RBs may be used to transmit different parts of the same TB to increase transmission reliability.

The precoding indication mode under repetition transmission of TDM PUSCH may be reused. The network side configures two SRS resource sets for the UE and indicates them through two SRI fields and/or TPMI fields. PUSCH transmission is then performed on each RB group based on the indicator of one SRI field and/or one TPMI field.

FIG. 2 is a schematic structural diagram of a terminal according to an embodiment of the present application. As shown in FIG. 2, the terminal includes a memory 220, a transceiver 200 and a processor 210.

The memory 220 is used for storing a computer program, the transceiver 200 is used for receiving and transmitting data under control of the processor 210, and the processor 210 is used for reading the computer program in the memory and performing the following operations:

obtaining downlink control information (DCI) transmitted from a network side; and

determining first information and/or second information based on a sounding reference signal resource indicator (SRI) field and/or a precoding information and number of layers (TPMI) field in the DCI,

where the first information includes one or more of the following:

a data stream, a transmission occasion or a resource block (RB) set, or a physical uplink shared channel (PUSCH); and

the second information includes one or more of the following:
a PUSCH port, a sounding reference signal (SRS) port, or a demodulation reference signal (DMRS) port.

In an embodiment, the transceiver 200 is used for receiving and transmitting data under control of the processor 210.

In FIG. 2, a bus architecture may include any number of interconnected buses and bridges, which are linked together through various circuits of one or more processors represented by the processor 210 and one or more memories represented by the memory 220. The bus architecture may also link together various other circuits, such as peripherals, voltage regulators, and power management circuits, etc., which are well known in the art, and therefore are not further described in the present application. The bus interface provides an interface. The transceiver 200 may include multiple elements, i.e., including a transmitter and a receiver, units for providing communication with various other devices over transmission media including wireless channels, wired channels, fiber optic cables, and the like.

The processor 210 is responsible for managing the bus architecture and general processing, and the memory 220 may store data used by the processor 210 when performing operations.

In an embodiment, the processor 210 may be a central processing unit (CPU), an application specific integrated circuit (ASIC), a field programmable gate array (FPGA) or a complex programmable logic device (CPLD), and the processor may also adopt a multi-core architecture.

The processor 210 is configured to perform any of the methods provided by the embodiments of the present application according to the obtained executable instructions by calling the computer program stored in the memory. The processor and memory may also be physically separated.

In an embodiment, the processor 210 is used for:
determining third information based on the SRI field and/or the TPMI field, where the third information includes at least one of the following:

the first information;

the second information;

second information corresponding to SRI indication and/or TPMI indication;

second information corresponding to a transmission configuration indication (TCI) state or a spatial relation; or

second information corresponding to the first information.

In an embodiment, the processor 210 is used for one or more of the following:

based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or

in case that the SRI field in the DCI indicates multiple SRS resource sets, determining first information respectively corresponding to each SRS resource set among the multiple SRS resource sets based on the multiple SRS resource sets; or

based on precoders respectively indicated by multiple TPMI fields, determining first information corresponding to each of the precoders respectively indicated by the multiple TPMI fields; or

based on multiple TCI states or spatial relations, determining first information respectively corresponding to each TCI state or spatial relation of the multiple TCI states or spatial relations; or

based on multiple precoders, determining first information respectively corresponding to each precoder of the multiple precoders, where each of the multiple precoders corresponds to each of the multiple SRS resources, or the multiple precoders are indicated by TPMI fields or TPMIs respectively corresponding to the multiple SRS resources; or

based on multiple SRS resources or TPMIs indicated by the network side through an information field in the DCI or a higher layer parameter, determining first information respectively corresponding to each SRS resource or TPMI of the multiple SRS resources or TPMIs.

In an embodiment, the processor 210 is used for:
determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, where the first SRI field and the second SRI field are SRI fields in the multiple SRI fields.

In an embodiment, the processor 210 is used for:
determining a first subgroup of first information corresponding to a first SRS resource set, and a second subgroup of first information corresponding to a second SRS resource set, where the first SRS resource set and the second SRS resource set are SRS resource sets among the multiple SRS resource sets.

In an embodiment, the processor 210 is used for:
determining a first subgroup of first information corresponding to the precoders indicated by a first TPMI field, and a second subgroup of first information corresponding to the precoders indicated by a second TPMI field, where the first TPMI field and the second TPMI field are TPMI fields among the multiple TPMI fields.

In an embodiment, the processor 210 is used for:
determining a first subgroup of first information corresponding to a first TCI state or spatial relation, and a second subgroup of first information corresponding to a second TCI state or spatial relation, where the first TCI state or spatial relation and the second TCI state or spatial relation are TCI states or spatial relations among the multiple TCI states or spatial relations.

In an embodiment, the processor 210 is used for:
determining a first subgroup of first information corresponding to a first precoder, and a second subgroup of first information corresponding to a second precoder, where the first precoder and the second precoder are precoders among the multiple precoders.

In an embodiment, the first subgroup of the first information and the second subgroup of the first information satisfy one or more of the following:

a first subgroup of the first information is a first subgroup of data streams, and a second subgroup of the first information is a second subgroup of data streams; or

a first subgroup of the first information is a first subgroup of transmission occasions, and a second subgroup of the first information is a second subgroup of transmission occasions; or

a first subgroup of the first information is a first RB set subgroup of RB sets, and a second subgroup of the first information is a second RB set subgroup of RB sets; or

a first subgroup of the first information is a first PUSCH subgroup of PUSCHs, and a second subgroup of the first information is a second PUSCH subgroup of PUSCHs.

In an embodiment, the processor 210 is used for:
determining a PUSCH port, where the PUSCH port includes at least one of the following:

a union of PUSCH ports determined by the first subgroup of the first information and PUSCH ports determined by the second subgroup of the first information;

a cascade of PUSCH ports determined by the first subgroup of the first information and PUSCH ports determined by the second subgroup of the first information;

a PUSCH port with a larger number of ports among PUSCH ports determined by the first subgroup of the first information and PUSCH ports determined by the second subgroup of the first information; or

PUSCH ports determined by the first subgroup of the first information and PUSCH ports determined by the second subgroup of the first information being the same or partially the same.

In an embodiment, the processor 210 is used for one or more of the following:

determining that multiple subgroups of the first information use a same spatial relation or transmission configuration indication (TCI) state, where an SRS resource indicated by the SRI field has one spatial relation or TCI state, or an SRS resource indicated by the SRI field corresponds to one SRI field and/or TPMI field; or

determining second information respectively corresponding to multiple spatial relations or transmission configuration indication (TCI) states.

In an embodiment, the processor 210 is used for one or more of the following:

determining that a first subgroup of data streams and a second subgroup of data streams use the same spatial relation or TCI state; or

determining that a first transmission occasion subgroup of transmission occasions and a second transmission occasion subgroup of transmission occasions use the same spatial relation or TCI state; or

determining that a first RB set subgroup of RB sets and a second RB set subgroup of RB sets use the same spatial relation or TCI state; or

determining that a first PUSCH subgroup of PUSCHs and a second PUSCH subgroup of PUSCHs use the same spatial relation or TCI state.

In an embodiment, the processor 210 is used for one or more of the following:

determining a number of data streams or a number of DMRS ports or a number of PUSCH ports corresponding to a k-th spatial relation or TCI state based on an indicator from the network side; or

determining a 1/K data stream or antenna port corresponding to each spatial relation or TCI state of the multiple spatial relations or TCI states based on a predefined rule; or

determining data streams corresponding to each spatial relation or TCI state of the multiple spatial relations or TCI states based on an association between a spatial relation or TCI state and a code division multiplexing (CDM) group; or

determining antenna port indicator fields corresponding to each spatial relation or TCI state of the multiple spatial relations or TCI states based on multiple antenna port indicator fields, where K spatial relations or TCI states correspond to M antenna port indicator fields, and in case that K and M are the same, the spatial relations or TCI states and the antenna port indicator field are in one-to-one correspondence, and K and M are positive integers,

where K is a number of the spatial relations or TCI states, and k is an index value of one of the K spatial relations or TCI states.

In an embodiment, a number of first SRS resource sets configured by the network side is greater than 1.
In an embodiment, a number of first SRS resource sets configured by the network side is 1.
In an embodiment, the processor 210 is used for:

determining a target transmission mode; and

switching to the target transmission mode,

where the target transmission mode includes any of the following:
a space division multiplexing (SDM) transmission, a frequency division multiplexing (FDM) transmission, a single frequency network (SFN) transmission, or a time division multiplexing (TDM) transmission.

It should be noted that the terminal provided by the embodiment of the present application can implement all the method steps in the method embodiments performed by the terminal and may achieve the same technical effect. The parts and beneficial effects of this embodiment that are the same as those of the method embodiments are not described in detail.

FIG. 3 is a schematic structural diagram of an apparatus for determining information according to an embodiment of the present application. As shown in FIG. 3, the apparatus for determining the information 300 includes: a first obtaining module 310 and a first determining module 320.

The first obtaining module 310 is used for obtaining downlink control information (DCI) transmitted from a network side.

The first determining module 320 is used for determining first information and/or second information based on a sounding reference signal resource indicator (SRI) field and/or a precoding information and number of layers (TPMI) field in the DCI.

The first information includes one or more of the following:

a data stream, a transmission occasion or a resource block (RB) set, or a physical uplink shared channel (PUSCH); and

the second information includes one or more of the following:
a PUSCH port, a sounding reference signal (SRS) port, or a demodulation reference signal (DMRS) port.

In an embodiment, the first determining module 320 is used for:
determining third information based on the SRI field and/or the TPMI field, where the third information includes at least one of the following:

the first information;

the second information;

second information corresponding to SRI indication and/or TPMI indication;

second information corresponding to a transmission configuration indication (TCI) state or a spatial relation; or

second information corresponding to the first information.

In an embodiment, the first determining module 320 is used for one or more of the following:

based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or

in case that the SRI field in the DCI indicates multiple SRS resource sets, determining first information respectively corresponding to each SRS resource set among the multiple SRS resource sets based on the multiple SRS resource sets; or

based on precoders respectively indicated by multiple TPMI fields, determining first information corresponding to each of the precoders respectively indicated by the multiple TPMI fields; or

based on multiple TCI states or spatial relations, determining first information respectively corresponding to each TCI state or spatial relation of the multiple TCI states or spatial relations; or

based on multiple precoders, determining first information respectively corresponding to each precoder of the multiple precoders, where each of the multiple precoders corresponds to each of the multiple SRS resources, or the multiple precoders are indicated by TPMI fields or TPMIs respectively corresponding to the multiple SRS resources; or

based on multiple SRS resources or TPMIs indicated by the network side through an information field in the DCI or a higher layer parameter, determining first information respectively corresponding to each SRS resource or TPMI of the multiple SRS resources or TPMIs.

In an embodiment, the first determining module 320 is used for:
determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, where the first SRI field and the second SRI field are SRI fields in the multiple SRI fields.

In an embodiment, the first determining module 320 is used for:
determining a first subgroup of first information corresponding to a first SRS resource set, and a second subgroup of first information corresponding to a second SRS resource set, where the first SRS resource set and the second SRS resource set are SRS resource sets among the multiple SRS resource sets.

In an embodiment, the first determining module 320 is used for:
determining a first subgroup of first information corresponding to the precoders indicated by a first TPMI field, and a second subgroup of first information corresponding to the precoders indicated by a second TPMI field, where the first TPMI field and the second TPMI field are TPMI fields among the multiple TPMI fields.

In an embodiment, the first determining module 320 is used for:
determining a first subgroup of first information corresponding to a first TCI state or spatial relation, and a second subgroup of first information corresponding to a second TCI state or spatial relation, where the first TCI state or spatial relation and the second TCI state or spatial relation are TCI states or spatial relations among the multiple TCI states or spatial relations.

In an embodiment, the first determining module 320 is used for:
determining a first subgroup of first information corresponding to a first precoder, and a second subgroup of first information corresponding to a second precoder, where the first precoder and the second precoder are precoders among the multiple precoders.

In an embodiment, the first subgroup of the first information and the second subgroup of the first information satisfy one or more of the following:

a first subgroup of the first information is a first subgroup of data streams, and a second subgroup of the first information is a second subgroup of data streams; or

a first subgroup of the first information is a first subgroup of transmission occasions, and a second subgroup of the first information is a second subgroup of transmission occasions; or

a first subgroup of the first information is a first RB set subgroup of RB sets, and a second subgroup of the first information is a second RB set subgroup of RB sets; or

a first subgroup of the first information is a first PUSCH subgroup of PUSCHs, and a second subgroup of the first information is a second PUSCH subgroup of PUSCHs.

In an embodiment, the first determining module 320 is used for:
determining a PUSCH port, where the PUSCH port includes at least one of the following:

a union of PUSCH ports determined by the first subgroup of the first information and PUSCH ports determined by the second subgroup of the first information;

a cascade of PUSCH ports determined by the first subgroup of the first information and PUSCH ports determined by the second subgroup of the first information;

a PUSCH port with a larger number of ports among PUSCH ports determined by the first subgroup of the first information and PUSCH ports determined by the second subgroup of the first information; or

PUSCH ports determined by the first subgroup of the first information and PUSCH ports determined by the second subgroup of the first information being the same or partially the same.

In an embodiment, the first determining module 320 is used for one or more of the following:

determining that multiple subgroups of the first information use a same spatial relation or transmission configuration indication (TCI) state, where an SRS resource indicated by the SRI field has one spatial relation or TCI state, or an SRS resource indicated by the SRI field corresponds to one SRI field and/or TPMI field; or

determining second information respectively corresponding to multiple spatial relations or transmission configuration indication (TCI) states.

In an embodiment, the first determining module 320 is used for one or more of the following:

determining that a first subgroup of data streams and a second subgroup of data streams use the same spatial relation or TCI state; or

determining that a first transmission occasion subgroup of transmission occasions and a second transmission occasion subgroup of transmission occasions use the same spatial relation or TCI state; or

determining that a first RB set subgroup of RB sets and a second RB set subgroup of RB sets use the same spatial relation or TCI state; or

determining that a first PUSCH subgroup of PUSCHs and a second PUSCH subgroup of PUSCHs use the same spatial relation or TCI state.

In an embodiment, the first determining module 320 is used for one or more of the following:

determining a number of data streams or a number of DMRS ports or a number of PUSCH ports corresponding to a k-th spatial relation or TCI state based on an indicator from the network side; or

determining a 1/K data stream or antenna port corresponding to each spatial relation or TCI state of the multiple spatial relations or TCI states based on a predefined rule; or

determining data streams corresponding to each spatial relation or TCI state of the multiple spatial relations or TCI states based on an association between a spatial relation or TCI state and a code division multiplexing (CDM) group; or

determining antenna port indicator fields corresponding to each spatial relation or TCI state of the multiple spatial relations or TCI states based on multiple antenna port indicator fields, where K spatial relations or TCI states correspond to M antenna port indicator fields, and in case that K and M are the same, the spatial relations or TCI states and the antenna port indicator field are in one-to-one correspondence, and K and M are positive integers,

where K is a number of the spatial relations or TCI states, and k is an index value of one of the K spatial relations or TCI states.

In an embodiment, a number of first SRS resource sets configured by the network side is greater than 1.
In an embodiment, a number of first SRS resource sets configured by the network side is 1.
In an embodiment, the apparatus further includes:

a second determining module, used for determining a target transmission mode; and

a first switching module, used for switching to the target transmission mode,

where the target transmission mode includes any of the following:
a space division multiplexing (SDM) transmission, a frequency division multiplexing (FDM) transmission, a single frequency network (SFN) transmission, or a time division multiplexing (TDM) transmission.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several indications to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted that the above-mentioned apparatus provided by the embodiment of the present application may implement all the method steps in the method embodiments performed by the terminal, and achieve the same technical effect. The parts and beneficial effects of this embodiment that are the same as those of the method embodiments are not described in detail.

An embodiment of the present application further provides a processor-readable storage medium, where the processor-readable storage medium stores a computer program, and the computer program is used to cause a processor to perform the method provided by the above-mentioned method embodiments for determining the information.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable indications. These computer-executable indications may be provided to processors of a general purpose computer, a special purpose computer, an embedded processor or other programmable data processing device to produce a machine and the indications executed by the processor of the computer or other programmable data processing device form a means for performing the functions specified in one or more flows in a flowchart and/or one or more blocks of a block diagram.

These processor-executable indications may also be stored in a processor-readable memory capable of directing a computer or other programmable data processing apparatus to operate in a particular manner, and the indications stored in the processor-readable memory may result in a manufacture including instruction means, the instruction means may perform the functions specified in one or more flows of the flowchart and/or one or more blocks of the block diagram.

These processor-executable indications may also be loaded onto a computer or other programmable data processing device to cause a series of operational steps to be performed on the computer or other programmable device to produce a computer-implemented procedure and indications performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for determining information, performed by a terminal, comprising:

    obtaining downlink control information, DCI, transmitted from a network side; and
    determining first information and/or second information based on a sounding reference signal resource indicator, SRI, field and/or a precoding information and number of layers, TPMI, field in the DCI,

wherein the first information comprises one or more of the following:

> a data stream, a transmission occasion or a resource block, RB, set, or a physical uplink shared channel, PUSCH; and
> the second information comprises one or more of the following:
> a PUSCH port, a sounding reference signal, SRS, port, or a demodulation reference signal, DMRS, port.

2. The method of claim 1, wherein determining the first information and/or the second information based on the SRI field and/or the TPMI field in the DCI comprises:
determining third information based on the SRI field and/or the TPMI field, wherein the third information comprises at least one of the following:

> the first information;
> the second information;
> second information corresponding to SRI indication and/or TPMI indication;
> second information corresponding to a transmission configuration indication, TCI, state or a spatial relation; or
> second information corresponding to the first information.

3. The method of claim 2, wherein determining the third information based on the SRI field and/or the TPMI field comprises one or more of the following:

> based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or
> in case that the SRI field in the DCI indicates multiple SRS resource sets, determining first information respectively corresponding to each SRS resource set among the multiple SRS resource sets based on the multiple SRS resource sets; or
> based on precoders respectively indicated by multiple TPMI fields, determining first information corresponding to each of the precoders respectively indicated by the multiple TPMI fields; or
> based on multiple TCI states or spatial relations, determining first information respectively corresponding to each TCI state or spatial relation of the multiple TCI states or spatial relations; or
> based on multiple precoders, determining first information respectively corresponding to each precoder of the multiple precoders, wherein each of the multiple precoders corresponds to each of the multiple SRS resources, or the multiple precoders are indicated by TPMI fields or TPMIs respectively corresponding to the multiple SRS resources; or
> based on multiple SRS resources or TPMIs indicated by the network side through an information field in the DCI or a higher layer parameter, determining first information respectively corresponding to each SRS resource or TPMI of the multiple SRS resources or TPMIs.

4. The method of claim 3, wherein based on the SRS resources indicated by the multiple SRI fields or the TPMI indications corresponding to the SRS resources indicated by the multiple SRI fields, determining the first information respectively corresponding to each SRS resource in the SRS resources indicated by the multiple SRI fields or the first information respectively corresponding to each TPMI indication in the TPMI indications corresponding to the SRS resources indicated by the multiple SRI fields comprises:
determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, wherein the first SRI field and the second SRI field are SRI fields in the multiple SRI fields.

5. The method of claim 3, wherein determining the first information respectively corresponding to each SRS resource set among the multiple SRS resource sets based on the multiple SRS resource sets comprises:
determining a first subgroup of first information corresponding to a first SRS resource set, and a second subgroup of first information corresponding to a second SRS resource set, wherein the first SRS resource set and the second SRS resource set are SRS resource sets among the multiple SRS resource sets.

6. The method of claim 3, wherein based on the precoders respectively indicated by the multiple TPMI fields, determining the first information corresponding to each of the precoders respectively indicated by the multiple TPMI fields comprises:

determining a first subgroup of first information corresponding to the precoders indicated by a first TPMI field, and a second subgroup of first information corresponding to the precoders indicated by a second TPMI field, wherein the first TPMI field and the second TPMI field are TPMI fields among the multiple TPMI fields.

7. The method of claim 2 or 3, wherein the determining the third information based on the SRI field and/or the TPMI field comprises:

determining that a first SRI field or a first TPMI field or a precoder indicated by a first TPMI field corresponds to a first subgroup of the second information, and a second SRI field or a second TPMI field or a precoder indicated by a second TPMI field corresponds to a second subgroup of the second information.

8. The method of claim 7, wherein the first subgroup is first N1 ports or N1 ports with a lower number of layers among v ports indicated by an antenna port indicator field, and the second subgroup is v-N1 ports with a higher number of layers or last v-N1 ports among the v ports.

9. The method of claim 3, wherein based on the multiple TCI states or spatial relations, determining the first information respectively corresponding to each TCI state or spatial relation of the multiple TCI states or spatial relations comprises:

determining a first subgroup of first information corresponding to a first TCI state or spatial relation, and a second subgroup of first information corresponding to a second TCI state or spatial relation, wherein the first TCI state or spatial relation and the second TCI state or spatial relation are TCI states or spatial relations among the multiple TCI states or spatial relations.

10. The method of claim 3, wherein based on the multiple precoders, determining the first information respectively corresponding to each precoder of the multiple precoders comprises:

determining a first subgroup of first information corresponding to a first precoder, and a second subgroup of first information corresponding to a second precoder, wherein the first precoder and the second precoder are precoders among the multiple precoders.

11. The method of any one of claims 4 to 10, wherein the first subgroup of the first information and the second subgroup of the first information satisfy one or more of the following:

a first subgroup of the first information is a first subgroup of data streams, and a second subgroup of the first information is a second subgroup of data streams; or
a first subgroup of the first information is a first subgroup of transmission occasions, and a second subgroup of the first information is a second subgroup of transmission occasions; or
a first subgroup of the first information is a first RB set subgroup of RB sets, and a second subgroup of the first information is a second RB set subgroup of RB sets; or
a first subgroup of the first information is a first PUSCH subgroup of PUSCHs, and a second subgroup of the first information is a second PUSCH subgroup of PUSCHs.

12. The method of any one of claims 2 to 10, wherein determining the third information based on the SRI field and/or the TPMI field further comprises: determining a PUSCH port, wherein the PUSCH port comprises at least one of the following:

a union of PUSCH ports determined by the first subgroup of the first information and PUSCH ports determined by the second subgroup of the first information;
a cascade of PUSCH ports determined by the first subgroup of the first information and PUSCH ports determined by the second subgroup of the first information;
a PUSCH port with a larger number of ports among PUSCH ports determined by the first subgroup of the first information and PUSCH ports determined by the second subgroup of the first information; or
PUSCH ports determined by the first subgroup of the first information and PUSCH ports determined by the second subgroup of the first information being the same or partially the same.

13. The method of any one of claims 1 to 12, wherein determining the first information and/or the second information based on the SRI field and/or the TPMI field in the DCI comprises:

determining that multiple subgroups of the first information use a same spatial relation or transmission configuration indication, TCI, state, wherein an SRS resource indicated by the SRI field has one spatial relation or TCI state, or an SRS resource indicated by the SRI field corresponds to one SRI field and/or TPMI field; or

determining second information respectively corresponding to multiple spatial relations or transmission configuration indication, TCI, states.

14. The method of claim 13, wherein determining that the multiple subgroups of the first information use the same spatial relation or TCI state comprises one or more of the following:

determining that a first subgroup of data streams and a second subgroup of data streams use the same spatial relation or TCI state; or

determining that a first transmission occasion subgroup of transmission occasions and a second transmission occasion subgroup of transmission occasions use the same spatial relation or TCI state; or

determining that a first RB set subgroup of RB sets and a second RB set subgroup of RB sets use the same spatial relation or TCI state; or

determining that a first PUSCH subgroup of PUSCHs and a second PUSCH subgroup of PUSCHs use the same spatial relation or TCI state.

15. The method of claim 13, wherein determining second information respectively corresponding to multiple spatial relations or TCI states comprises one or more of the following:

determining a number of data streams or a number of DMRS ports or a number of PUSCH ports corresponding to a k-th spatial relation or TCI state based on an indicator from the network side; or

determining a 1/K data stream or antenna port corresponding to each spatial relation or TCI state of the multiple spatial relations or TCI states based on a predefined rule; or

determining data streams corresponding to each spatial relation or TCI state of the multiple spatial relations or TCI states based on an association between a spatial relation or TCI state and a code division multiplexing, CDM, group; or

determining antenna port indicator fields corresponding to each spatial relation or TCI state of the multiple spatial relations or TCI states based on multiple antenna port indicator fields, wherein K spatial relations or TCI states correspond to M antenna port indicator fields, and in case that K and M are the same, the spatial relations or TCI states and the antenna port indicator field are in one-to-one correspondence, and K and M are positive integers, wherein K is a number of the spatial relations or TCI states, and k is an index value of one of the K spatial relations or TCI states.

16. The method of any one of claims 1 to 12, wherein a number of first SRS resource sets configured by the network side is greater than 1.

17. The method of any one of claims 1 to 16, wherein a number of first SRS resource sets configured by the network side is 1.

18. The method of any one of claims 1 to 17, further comprising:

determining a target transmission mode; and

performing transmission based on the target transmission mode,

wherein the target transmission mode comprises any of the following:

a space division multiplexing, SDM, transmission, a frequency division multiplexing, FDM, transmission, a single frequency network, SFN, transmission, or a time division multiplexing, TDM, transmission.

19. A terminal, comprising a memory, a transceiver and a processor,

wherein the memory is used for storing a computer program, the transceiver is used for receiving and transmitting data under control of the processor, and the processor is used for reading the computer program in the memory and performing the following operations:

obtaining downlink control information, DCI, transmitted from a network side; and

determining first information and/or second information based on a sounding reference signal resource indicator, SRI, field and/or a precoding information and number of layers, TPMI, field in the DCI,

wherein the first information comprises one or more of the following:

a data stream, a transmission occasion or a resource block, RB, set, or a physical uplink shared channel, PUSCH; and

the second information comprises one or more of the following:

a PUSCH port, a sounding reference signal, SRS, port, or a demodulation reference signal, DMRS, port.

20. The terminal of claim 19, wherein determining the first information and/or the second information based on the SRI field and/or the TPMI field in the DCI comprises:

determining third information based on the SRI field and/or the TPMI field, wherein the third information comprises at least one of the following:

the first information;

the second information;

second information corresponding to SRI indication and/or TPMI indication;

second information corresponding to a transmission configuration indication, TCI, state or a spatial relation; or

second information corresponding to the first information.

21. The terminal of claim 20, wherein determining the third information based on the SRI field and/or the TPMI field comprises one or more of the following:

based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or

in case that the SRI field in the DCI indicates multiple SRS resource sets, determining first information respectively corresponding to each SRS resource set among the multiple SRS resource sets based on the multiple SRS resource sets; or

based on precoders respectively indicated by multiple TPMI fields, determining first information corresponding to each of the precoders respectively indicated by the multiple TPMI fields; or

based on multiple TCI states or spatial relations, determining first information respectively corresponding to each TCI state or spatial relation of the multiple TCI states or spatial relations; or

based on multiple precoders, determining first information respectively corresponding to each precoder of the multiple precoders, wherein each of the multiple precoders corresponds to each of the multiple SRS resources, or the multiple precoders are indicated by TPMI fields or TPMIs respectively corresponding to the multiple SRS resources; or

based on multiple SRS resources or TPMIs indicated by the network side through an information field in the DCI or a higher layer parameter, determining first information respectively corresponding to each SRS resource or TPMI of the multiple SRS resources or TPMIs.

22. The terminal of claim 21, wherein based on the SRS resources indicated by the multiple SRI fields or the TPMI indications corresponding to the SRS resources indicated by the multiple SRI fields, determining the first information respectively corresponding to each SRS resource in the SRS resources indicated by the multiple SRI fields or the first information respectively corresponding to each TPMI indication in the TPMI indications corresponding to the SRS resources indicated by the multiple SRI fields comprises:

determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, wherein the first SRI field and the second SRI field are SRI fields in the multiple SRI fields.

23. The terminal of claim 21, wherein determining the first information respectively corresponding to each SRS resource set among the multiple SRS resource sets based on the multiple SRS resource sets comprises:

determining a first subgroup of first information corresponding to a first SRS resource set, and a second subgroup of first information corresponding to a second SRS resource set, wherein the first SRS resource set and the second SRS resource set are SRS resource sets among the multiple SRS resource sets.

24. The terminal of claim 21, wherein based on the precoders respectively indicated by the multiple TPMI fields, determining the first information corresponding to each of the precoders respectively indicated by the multiple TPMI fields comprises:
determining a first subgroup of first information corresponding to the precoders indicated by a first TPMI field, and a second subgroup of first information corresponding to the precoders indicated by a second TPMI field, wherein the first TPMI field and the second TPMI field are TPMI fields among the multiple TPMI fields.

25. The terminal of claim 22, wherein the determining the third information based on the SRI field and/or the TPMI field comprises:
determining that a first SRI field or a first TPMI field or a precoder indicated by a first TPMI field corresponds to a first subgroup of the second information, and a second SRI field or a second TPMI field or a precoder indicated by a second TPMI field corresponds to a second subgroup of the second information.

26. The terminal of claim 25, wherein the first subgroup is first N1 ports or N1 ports with a lower number of layers among v ports indicated by an antenna port indicator field, and the second subgroup is v-N1 ports with a higher number of layers or last v-N1 ports among the v ports.

27. The terminal of claim 21, wherein based on the multiple TCI states or spatial relations, determining the first information respectively corresponding to each TCI state or spatial relation of the multiple TCI states or spatial relations comprises:
determining a first subgroup of first information corresponding to a first TCI state or spatial relation, and a second subgroup of first information corresponding to a second TCI state or spatial relation, wherein the first TCI state or spatial relation and the second TCI state or spatial relation are TCI states or spatial relations among the multiple TCI states or spatial relations.

28. The terminal of claim 21, wherein based on the multiple precoders, determining the first information respectively corresponding to each precoder of the multiple precoders comprises:
determining a first subgroup of first information corresponding to a first precoder, and a second subgroup of first information corresponding to a second precoder, wherein the first precoder and the second precoder are precoders among the multiple precoders.

29. The terminal of any one of claims 22 to 28, wherein the first subgroup of the first information and the second subgroup of the first information satisfy one or more of the following:

   a first subgroup of the first information is a first subgroup of data streams, and a second subgroup of the first information is a second subgroup of data streams; or
   a first subgroup of the first information is a first subgroup of transmission occasions, and a second subgroup of the first information is a second subgroup of transmission occasions; or
   a first subgroup of the first information is a first RB set subgroup of RB sets, and a second subgroup of the first information is a second RB set subgroup of RB sets; or
   a first subgroup of the first information is a first PUSCH subgroup of PUSCHs, and a second subgroup of the first information is a second PUSCH subgroup of PUSCHs.

30. The terminal of any one of claims 20 to 28, wherein determining the third information based on the SRI field and/or the TPMI field further comprises: determining a PUSCH port, wherein the PUSCH port comprises at least one of the following:

   a union of PUSCH ports determined by the first subgroup of the first information and PUSCH ports determined by the second subgroup of the first information;
   a cascade of PUSCH ports determined by the first subgroup of the first information and PUSCH ports determined by the second subgroup of the first information;
   a PUSCH port with a larger number of ports among PUSCH ports determined by the first subgroup of the first information and PUSCH ports determined by the second subgroup of the first information; or
   PUSCH ports determined by the first subgroup of the first information and PUSCH ports determined by the second subgroup of the first information being the same or partially the same.

31. The terminal of any one of claims 18 to 28, wherein determining the first information and/or the second information based on the SRI field and/or the TPMI field in the DCI comprises:

   determining that multiple subgroups of the first information use a same spatial relation or transmission configuration indication, TCI, state, wherein an SRS resource indicated by the SRI field has one spatial relation or TCI state, or an SRS resource indicated by the SRI field corresponds to one SRI field and/or TPMI field; or determining second information respectively corresponding to multiple spatial relations or transmission configuration indication, TCI, states.

32. The terminal of claim 31, wherein determining that the multiple subgroups of the first information use the same spatial relation or TCI state comprises one or more of the following:

determining that a first subgroup of data streams and a second subgroup of data streams use the same spatial relation or TCI state; or
determining that a first transmission occasion subgroup of transmission occasions and a second transmission occasion subgroup of transmission occasions use the same spatial relation or TCI state; or
determining that a first RB set subgroup of RB sets and a second RB set subgroup of RB sets use the same spatial relation or TCI state; or
determining that a first PUSCH subgroup of PUSCHs and a second PUSCH subgroup of PUSCHs use the same spatial relation or TCI state.

33. The terminal of claim 31, wherein determining second information respectively corresponding to multiple spatial relations or TCI states comprises one or more of the following:

determining a number of data streams or a number of DMRS ports or a number of PUSCH ports corresponding to a k-th spatial relation or TCI state based on an indicator from the network side; or
determining a 1/K data stream or antenna port corresponding to each spatial relation or TCI state of the multiple spatial relations or TCI states based on a predefined rule; or
determining data streams corresponding to each spatial relation or TCI state of the multiple spatial relations or TCI states based on an association between a spatial relation or TCI state and a code division multiplexing, CDM, group; or
determining antenna port indicator fields corresponding to each spatial relation or TCI state of the multiple spatial relations or TCI states based on multiple antenna port indicator fields, wherein K spatial relations or TCI states correspond to M antenna port indicator fields, and in case that K and M are the same, the spatial relations or TCI states and the antenna port indicator field are in one-to-one correspondence, and K and M are positive integers, wherein K is a number of the spatial relations or TCI states, and k is an index value of one of the K spatial relations or TCI states.

34. The terminal of any one of claims 19 to 30, wherein a number of first SRS resource sets configured by the network side is greater than 1.

35. The terminal of any one of claims 19 to 33, wherein a number of first SRS resource sets configured by the network side is 1.

36. The terminal of any one of claims 19 to 35, wherein the operation further comprises:

determining a target transmission mode; and
switching to the target transmission mode,
wherein the target transmission mode comprises any of the following:
a space division multiplexing, SDM, transmission, a frequency division multiplexing, FDM, transmission, a single frequency network, SFN, transmission, or a time division multiplexing, TDM, transmission.

37. An apparatus for determining information, comprising:

a first obtaining module, for obtaining downlink control information, DCI, transmitted from a network side; and
a first determining module, used for determining first information and/or second information based on a sounding reference signal resource indicator, SRI, field and/or a precoding information and number of layers, TPMI, field in the DCI,
wherein the first information comprises one or more of the following:

a data stream, a transmission occasion or a resource block, RB, set, or a physical uplink shared channel, PUSCH; and

the second information comprises one or more of the following:
a PUSCH port, a sounding reference signal, SRS, port, or a demodulation reference signal, DMRS, port.

38. The apparatus of claim 37, wherein the first determining module is used for:
determining third information based on the SRI field and/or the TPMI field, wherein the third information comprises at least one of the following:

the first information;
the second information;
second information corresponding to SRI indication and/or TPMI indication;
second information corresponding to a transmission configuration indication, TCI, state or a spatial relation; or
second information corresponding to the first information.

39. The apparatus of claim 38, wherein the first determining module is used for one or more of the following:

based on SRS resources indicated by multiple SRI fields or TPMI indications corresponding to SRS resources indicated by multiple SRI fields, determining first information respectively corresponding to each SRS resource in the SRS resources indicated by the multiple SRI fields or first information respectively corresponding to each TPMI indication in the TPMI indications corresponding to the SRS resources indicated by the multiple SRI fields; or
in case that the SRI field in the DCI indicates multiple SRS resource sets, determining first information respectively corresponding to each SRS resource set among the multiple SRS resource sets based on the multiple SRS resource sets; or
based on precoders respectively indicated by multiple TPMI fields, determining first information corresponding to each of the precoders respectively indicated by the multiple TPMI fields; or
based on multiple TCI states or spatial relations, determining first information respectively corresponding to each TCI state or spatial relation of the multiple TCI states or spatial relations; or
based on multiple precoders, determining first information respectively corresponding to each precoder of the multiple precoders, wherein each of the multiple precoders corresponds to each of the multiple SRS resources, or the multiple precoders are indicated by TPMI fields or TPMIs respectively corresponding to the multiple SRS resources; or
based on multiple SRS resources or TPMIs indicated by the network side through an information field in the DCI or a higher layer parameter, determining first information respectively corresponding to each SRS resource or TPMI of the multiple SRS resources or TPMIs.

40. The apparatus of claim 39, wherein the first determining module is used for:
determining a first subgroup of first information corresponding to SRS resources indicated by a first SRI field or TPMI indications corresponding to SRS resources indicated by a first SRI field, and determining a second subgroup of first information corresponding to SRS resources indicated by a second SRI field or TPMI indications corresponding to SRS resources indicated by a second SRI field, wherein the first SRI field and the second SRI field are SRI fields in the multiple SRI fields.

41. The apparatus of claim 39, wherein the first determining module is used for:
determining a first subgroup of first information corresponding to a first SRS resource set, and a second subgroup of first information corresponding to a second SRS resource set, wherein the first SRS resource set and the second SRS resource set are SRS resource sets among the multiple SRS resource sets.

42. The apparatus of claim 39, wherein the first determining module is used for:
determining a first subgroup of first information corresponding to the precoders indicated by a first TPMI field, and a second subgroup of first information corresponding to the precoders indicated by a second TPMI field, wherein the first TPMI field and the second TPMI field are TPMI fields among the multiple TPMI fields.

43. The apparatus of claim 39, wherein the determining the third information based on the SRI field and/or the TPMI field comprises:
determining that a first SRI field or a first TPMI field or a precoder indicated by a first TPMI field corresponds to a first subgroup of the second information, and a second SRI field or a second TPMI field or a precoder indicated by a second TPMI field corresponds to a second subgroup of the second information.

44. The apparatus of claim 43, wherein the first subgroup is first N1 ports or N1 ports with a lower number of layers among v ports indicated by an antenna port indicator field, and the second subgroup is v-N1 ports with a higher number of layers or last v-N1 ports among the v ports.

45. The apparatus of claim 39, wherein the first determining module is used for:
determining a first subgroup of first information corresponding to a first TCI state or spatial relation, and a second subgroup of first information corresponding to a second TCI state or spatial relation, wherein the first TCI state or spatial relation and the second TCI state or spatial relation are TCI states or spatial relations among the multiple TCI states or spatial relations.

46. The apparatus of claim 39, wherein the first determining module is used for:
determining a first subgroup of first information corresponding to a first precoder, and a second subgroup of first information corresponding to a second precoder, wherein the first precoder and the second precoder are precoders among the multiple precoders.

47. The apparatus of any one of claims 40 to 46, wherein the first subgroup of the first information and the second subgroup of the first information satisfy one or more of the following:

a first subgroup of the first information is a first subgroup of data streams, and a second subgroup of the first information is a second subgroup of data streams; or
a first subgroup of the first information is a first subgroup of transmission occasions, and a second subgroup of the first information is a second subgroup of transmission occasions; or
a first subgroup of the first information is a first RB set subgroup of RB sets, and a second subgroup of the first information is a second RB set subgroup of RB sets; or
a first subgroup of the first information is a first PUSCH subgroup of PUSCHs, and a second subgroup of the first information is a second PUSCH subgroup of PUSCHs.

48. The apparatus of any one of claims 38 to 46, wherein the first determining module is further used for: determining a PUSCH port, wherein the PUSCH port comprises at least one of the following:

a union of PUSCH ports determined by the first subgroup of the first information and PUSCH ports determined by the second subgroup of the first information;
a cascade of PUSCH ports determined by the first subgroup of the first information and PUSCH ports determined by the second subgroup of the first information;
a PUSCH port with a larger number of ports among PUSCH ports determined by the first subgroup of the first information and PUSCH ports determined by the second subgroup of the first information; or
PUSCH ports determined by the first subgroup of the first information and PUSCH ports determined by the second subgroup of the first information being the same or partially the same.

49. The apparatus of any one of claims 37 to 48, wherein the first determining module is specifically used for one or more of the following:

determining that multiple subgroups of the first information use a same spatial relation or transmission configuration indication, TCI, state, wherein an SRS resource indicated by the SRI field has one spatial relation or TCI state, or an SRS resource indicated by the SRI field corresponds to one SRI field and/or TPMI field; or
determining second information respectively corresponding to multiple spatial relations or transmission configuration indication, TCI, states.

50. The apparatus of claim 49, wherein the first determining module is specifically used for one or more of the following:

determining that a first subgroup of data streams and a second subgroup of data streams use the same spatial relation or TCI state; or
determining that a first transmission occasion subgroup of transmission occasions and a second transmission occasion subgroup of transmission occasions use the same spatial relation or TCI state; or
determining that a first RB set subgroup of RB sets and a second RB set subgroup of RB sets use the same spatial relation or TCI state; or
determining that a first PUSCH subgroup of PUSCHs and a second PUSCH subgroup of PUSCHs use the same spatial relation or TCI state.

**51.** The apparatus of claim 49, wherein the first determining module is used for one or more of the following:

determining a number of data streams or a number of DMRS ports or a number of PUSCH ports corresponding to a k-th spatial relation or TCI state based on an indicator from the network side; or

determining a 1/K data stream or antenna port corresponding to each spatial relation or TCI state of the multiple spatial relations or TCI states based on a predefined rule; or

determining data streams corresponding to each spatial relation or TCI state of the multiple spatial relations or TCI states based on an association between a spatial relation or TCI state and a code division multiplexing, CDM, group; or

determining antenna port indicator fields corresponding to each spatial relation or TCI state of the multiple spatial relations or TCI states based on multiple antenna port indicator fields, wherein K spatial relations or TCI states correspond to M antenna port indicator fields, and in case that K and M are the same, the spatial relations or TCI states and the antenna port indicator field are in one-to-one correspondence, and K and M are positive integers, wherein K is a number of the spatial relations or TCI states, and k is an index value of one of the K spatial relations or TCI states.

**52.** The apparatus of any one of claims 37 to 48, wherein a number of first SRS resource sets configured by the network side is greater than 1.

**53.** The apparatus of any one of claims 37 to 51, wherein a number of first SRS resource sets configured by the network side is 1.

**54.** The apparatus of any one of claims 37 to 53, further comprising:

a second determining module, used for determining a target transmission mode; and
a first switching module, used for switching to the target transmission mode,
wherein the target transmission mode comprises any of the following:
a space division multiplexing, SDM, transmission, a frequency division multiplexing, FDM, transmission, a single frequency network, SFN, transmission, or a time division multiplexing, TDM, transmission.

**55.** A processor-readable storage medium, wherein the processor-readable storage medium stores a computer program, and the computer program is used to cause a processor to perform the method of any one of claims 1 to 18.

Obtaining DCI transmitted from a network side — 100

Determining first information and/or second information based on a SRI field and/or a TPMI field in the DCI, where the first information includes one or more of the following: a data stream, a transmission occasion or an RB set, or a PUSCH; and the second information includes one or more of the following: a PUSCH port, an SRS port, or a DMRS port — 110

FIG. 1

—210
Processor

—200
Tranceiver

—220
Memory

Bus interface

FIG. 2

— 300

Apparatus for determining information

— 310
First obtaining module

— 320
First determining module

FIG. 3

## INTERNATIONAL SEARCH REPORT

| International application No. |
|---|
| **PCT/CN2023/091567** |

**A.    CLASSIFICATION OF SUBJECT MATTER**

H04B 7/0456(2017.01)i

According to International Patent Classification (IPC) or to both national classification and IPC

**B.    FIELDS SEARCHED**

Minimum documentation searched (classification system followed by classification symbols)

IPC: H04B H04W H04Q

Documentation searched other than minimum documentation to the extent that such documents are included in the fields searched

Electronic data base consulted during the international search (name of data base and, where practicable, search terms used)

3GPP, CNTXT, ENTXT, CNKI, ENTXTC: 下行控制信息, 下行链路控制信息, SRS资源指示, 传输预编码矩阵指示, 预编码和层数指示, 数据流, 流数, 层, 传输时机, 发送时机, 资源块, 端口, 面板, DCI, SRI, TPMI, PUSCH, RB, resource block, SRS, DMRS, port, SDM, FDM, SFN, panel, STx2P, STxMP, transm+ w occasion, TO, layer, TRP

**C.    DOCUMENTS CONSIDERED TO BE RELEVANT**

| Category* | Citation of document, with indication, where appropriate, of the relevant passages | Relevant to claim No. |
|---|---|---|
| PX | CATT. "On UL precoding indication for multi-panel transmission" *3GPP TSG RAN WG1 #109-e R1-2203446*, 29 April 2022 (2022-04-29), sections 1-5 | 1-55 |
| X | WO 2021180897 A1 (FRAUNHOFER GESELLSCHAFT ZUR FÖRDERUNG DER ANGEWANDTEN FORSCHUNG E.V.) 16 September 2021 (2021-09-16) description, pp. 3-64, figures 1-8, and claims 1-42 | 1-55 |
| X | CN 113824481 A (HUAWEI TECHNOLOGIES CO., LTD.) 21 December 2021 (2021-12-21) description, paragraphs 0004-0411 | 1-55 |
| X | CN 114337953 A (VIVO COMMUNICATION TECHNOLOGY CO., LTD.) 12 April 2022 (2022-04-12) description, paragraphs 0041-0333 | 1-55 |
| A | SHARP. "Views on 8 TX UL Transmission" *3GPP TSG RAN WG1 #109-e R1-2204512*, 28 April 2022 (2022-04-28), entire document | 1-55 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 August 2023** | **15 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091567**

| Patent document cited in search report | | | Publication date (day/month/year) | Patent family member(s) | | | Publication date (day/month/year) |
|---|---|---|---|---|---|---|---|
| WO | 2021180897 | A1 | 16 September 2021 | US | 2023209567 | A1 | 29 June 2023 |
| | | | | EP | 3879738 | A1 | 15 September 2021 |
| | | | | EP | 4118779 | A1 | 18 January 2023 |
| | | | | JP | 2023510639 | A | 14 March 2023 |
| | | | | CN | 115362653 | A | 18 November 2022 |
| CN | 113824481 | A | 21 December 2021 | WO | 2021254506 | A1 | 23 December 2021 |
| CN | 114337953 | A | 12 April 2022 | WO | 2022068868 | A1 | 07 April 2022 |

Form PCT/ISA/210 (patent family annex) (July 2022)

**EP 4 518 174 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210475018